# EUROPÄISCHE PATENTSCHRIFT

(11) **EP 3 408 484 B1**
(45) Veröffentlichungstag und Bekanntmachung des Hinweises auf die Patenterteilung: **22.06.2022**
(21) Anmeldenummer: 17701442.0
(22) Anmeldetag: 18.01.2017
(51) Int. Cl.: E05F 11/38, B60J 1/17, E05D 15/16

(54) **FENSTERHEBERBAUGRUPPE MIT MEHRTEILIGEM SCHEIBENFÜHRUNGSELEMENT FÜR EIN FLÄCHENBÜNDIGES SCHEIBENKONZEPT UND MONTAGEVERFAHREN**
WINDOW LIFTER ASSEMBLY WITH MULTIPART PANE GUIDE ELEMENT FOR A FLUSH PANE DESIGN, AND ASSEMBLY METHOD
MODULE DE LEVAGE DE FENÊTRE MUNI D'UN ÉLÉMENT DE GUIDAGE DE VITRE EN PLUSIEURS PARTIES POUR TYPE DE VITRE À FLEUR DE SURFACE ET PROCÉDÉ DE MONTAGE

(30) Priorität: 26.01.2016 DE 102016201106
(43) Veröffentlichungstag der Anmeldung: 05.12.2018
(73) Patentinhaber: Brose Fahrzeugteile SE & Co. Kommanditgesellschaft, Bamberg, 96052 Bamberg (DE)
(72) Erfinder: FREYMUTH, Ian, 08810 Sant Pere de Ribes/Rocamar (ES); GRIESMANN, Manuel, 87675 Stötten am Auerberg (DE); HEPPNER, Matthias, 96224 Burgkunstadt (DE)
(74) Vertreter: Maikowski & Ninnemann Patentanwälte Partnerschaft mbB
(86) Internationale Anmeldenummer: PCT/EP2017/050913
(87) Internationale Veröffentlichungsnummer: WO 2017/129451

(56) Entgegenhaltungen:
- DE-B3-102005 052 945
- FR-A1- 3 021 254
- US-A1- 2004 083 654

## Beschreibung

Die Erfindung betrifft insbesondere eine Fensterheberbaugruppe nach dem Oberbegriff des Anspruchs 1 sowie ein Verfahren zur Montage einer Fensterheberbaugruppe.

Fensterheberbaugruppen mit einer entlang einer Verstellbahn verstellbaren und sich entlang einer (gegebenenfalls gekrümmten) Scheibenebene erstreckenden Fensterscheibe sind für Fahrzeugfensterheber weithin bekannt, z.B. aus der DE 10 2005 052 945 B1, der FR 3 021 254 A1 oder der US 2004/083654 A1. Über die Fensterscheibe wird dabei in einem geschlossenen Zustand eine Fensteröffnung innerhalb einer Fahrzeugtür oder, bei einer hinteren Seitenscheibe, eine karosserieseitige Fensteröffnung verschlossen. In den letzten Jahren erfreuen sich zumindest bei Oberklasse-Fahrzeugen sogenannte flächenbündige Scheibenkonzepte (englisch "flush glass" oder "flush glazing") größerer Beliebtheit. Hierbei liegt die Fensterscheibe in ihrer geschlossenen Position flächenbündig zu oberen und/oder seitlichen Karosserieteilen vor, die eine durch die Fensterscheibe zu schließende Fensteröffnung beranden. Die Fensterscheibe liegt somit mit Blick auf ihrer Außenseite nicht gegenüber den sie umgebenden Karosserieteilen zurückgesetzt vor, wenn sie vollständig geschlossen ist. Vielmehr wird der Eindruck einer durchgehend verlaufenden, ebenen Scheiben- und Karosseriefläche an der Fahrzeugseite erzeugt. Beispielsweise ist ein solches flächenbündiges Scheibenkonzept in der DE 35 00 791 A1 beschrieben. In neuerer Zeit erfolgte eine Umsetzung eines flächenbündigen Scheibenkonzepts beispielsweise im Porsche Panamera.

Zur Führung der Fensterscheibe wird bei derartigen Scheibenkonzepten an einem vorderen und hinteren seitlichen Rand der Fensterscheibe ein Scheibenführungselement fixiert. Ein solches Scheibenführungselement ist dann jeweils entlang der Verstellbahn an einem anderen, karosserieseitigen oder türseitigen Führungselement, das üblicherweise als Führungsprofil ausgebildet ist, verschieblich geführt. Die an der Fensterscheibe fixierten Scheibenführungselemente werden dabei regelmäßig als "Pinguides" bezeichnet. Die Montage einer derartigen Fensterscheibe ist bisher jedoch vergleichsweise aufwendig. So muss die Scheibe regelmäßig von unten in einen Führungskanal eines karosserieseitigen oder türseitigen Führungsprofils eingeschoben werden, d.h., zum Beispiel von unterhalb einer Fensterbrüstung einer Fahrzeugtür. Eine solche Montage erfordert dann aber auch ein spezielles Türkonzept, bei dem entweder eine Türaußenhaut nachträglich montiert wird oder ein komplett montierbares Türrahmenmodul, bestehend aus Türträger, Fensterrahmen und hieran montierter Scheibe, bereitgestellt und nachträglich mit den restlichen Komponenten der Fahrzeugtür, insbesondere einer Türinnenhaut und einer Türaußenhaut verbunden wird.

Es ist daher Aufgabe der Erfindung, eine Fensterheberbaugruppe bereitzustellen, die bei Fahrzeugfensterhebern für ein flächenbündiges Scheibenkonzept (sogenanntes "flush glass" oder "flush glazing" Konzept) eine vereinfachte Montage ermöglicht.

Diese Aufgabe wird sowohl mit einer Fensterheberbaugruppe des Anspruchs 1 als auch mit einem Montageverfahren des Anspruchs 13 gelöst.

Erfindungsgemäß ist eine Fensterheberbaugruppe mit einer verstellbaren Fensterscheibe für einen Fahrzeugfensterheber vorgesehen, bei dem die Fensterscheibe in einem geschlossenen Zustand flächenbündig zu oberen und/oder seitlichen Karosserieteilen vorliegt, die eine durch die Fensterscheibe zu schließende Fensteröffnung eines Fensterrahmens beranden. Die Fensterheberbaugruppe umfasst hierbei wenigstens ein Scheibenführungselement, das an der Fensterscheibe im Bereich einer (vorderen oder hinteren) seitlichen Scheibenkante fixiert ist, und wenigstens ein rahmenseitiges Führungselement, an dem das Scheibenführungselement an der Fensteröffnung verschieblich gehalten ist. Das wenigstens eine Scheibenführungselement ist erfindungsgemäß mehrteilig mit mindestens einem ersten Führungsteil und einem zweiten Führungsteil ausgeführt, wobei
- das erste Führungsteil einen Führungsabschnitt ausbildet, über den das Scheibenführungselement verschieblich an dem rahmenseitigen Führungselement gehalten ist,
- das zweite Führungsteil einen Verbindungsabschnitt ausbildet, über den das Scheibenführungselement an der Fensterscheibe fixiert ist, und
- das erste Führungsteil und das zweite Führungsteil als voneinander separate Bauteile ausgebildet sind, wobei das zweite Führungsteil unabhängig von dem ersten Führungsteil an der Fensterscheibe fixierbar ist und das ersten Führungsteil unabhängig von dem zweiten Führungsteil verschieblich an dem rahmenseitigen Führungselement positionierbar ist, bevor das Scheibenführungselement bestimmungsgemäß zusammengebaut wird.

Durch die mehrteilige Ausführung des Scheibenführungselements ist die Fensterscheibenmontage erheblich flexibler und erleichtert. Insbesondere ist hierüber bei einem flächenbündigen Scheibenkonzept eine konventionelle Türeanordnung verwendbar, ohne dass hierbei eine nachträglich an einen Türkasten zu montierende Türaußenhaut vorgesehen werden müsste. Die erfindungsgemäße Lösung ist auch nicht auf spezielle Konstruktionsprinzipien für eine Fahrzeugtür festgelegt, beispielsweise auf Fahrzeugtüren mit oberhalb einer Brüstung integriertem Fensterrahmen. So ist mit der erfindungsgemäßen Lösung ein mehrteiliges (wenigstens zweiteiliges) Scheibenführungselement - bei einem flächenbündigen Scheibenkonzept auch "Pin guide"-Element genannt - bereitgestellt, das eine kostengünstige Montage der im geschlossenen Zustand flächenbündig mit oberen und/oder seitlichen Karosserieteilen abschließenden Fensterscheibe ermöglicht.

Mit der erfindungsgemäßen Lösung ist es auch bei einem flächenbündigen Scheibenkonzept nicht zwingend, die Fensterscheibe von unterhalb der Brüstung, d.h., im Bereich des Türkastens in rahmenseitige Führungselemente einschieben zu müssen. Vielmehr kann das separate, erste Führungsteil unabhängig von der Fensterscheibe an ein rahmenseitiges Führungselement, beispielsweise in einen Führungskanal eines entsprechenden Führungsprofils, von oben oder von der Seite eingeschoben, eingesteckt und/oder eingedreht werden. In einer Variante wird dann erst nachträglich die Fensterscheibe von oberhalb der Brüstung in den Türschacht der konventionell zweischalig hergestellten Fahrzeugtür eingesetzt und über das an der Fensterscheibe fixierte zweite Führungsteil des Scheibenführungselements an dem bereits vormontierten ersten Führungsteil festgelegt.

Das erste Führungsteil kann somit grundsätzlich zunächst ohne Verbindung zu der Fensterscheibe an einem seitlichen, rahmenseitigen Führungselement verschieblich angeordnet werden, bevor anschließend eine Verbindung zu dem zweiten Führungsteil des Scheibenführungselements erfolgt, das die Anbindung an die Fensterscheibe ermöglicht. Hierbei ist es nicht zwingend, dass das zweite Führungsteil tatsächlich bereits an der Fensterscheibe fixiert ist, wenn das Scheibenführungselement zusammengebaut wird. Grundsätzlich kann auch eine Fixierung des zweiten Führungsteils an der Fensterscheibe nachträglich erfolgen, d.h., nach Verbindung der ersten und zweiten Führungsteile untereinander. Im Zuge einer schnellen und unkomplizierten Montage ist jedoch regelmäßig eine vorherige Befestigung des zweiten Führungsteils an der Fensterscheibe zu bevorzugen, sodass das zweite Führungsteil bereits an der Fensterscheibe fixiert ist, wenn das Scheibenführungselement zusammengebaut wird. Hierbei ist dann aber mit der erfindungsgemäßen Lösung erreicht, dass die Fensterscheibe an wenigstens einem rahmenseitigen Führungselement mit seinem zweiten Führungsteil nicht mehr eingefädelt werden muss, sondern lediglich eine Anbindung an das erste Führungsteil, das bereits an dem rahmenseitigen Führungselement (vor-) positioniert ist, hergestellt werden muss.

Das erste, an dem rahmenseitigen Führungselement verschieblich zu positionierende Führungsteil und das zweite, an der Fensterscheibe zu fixierende Führungsteil des mehrteiligen Scheibenführungselements können jeweils eine mechanische Schnittstelle zur Verbindung der ersten und zweiten Führungsteile miteinander aufweisen. Sowohl das erste als auch das zweite Führungsteil weisen somit eine mechanische Schnittstelle auf, die dazu eingerichtet und ausgebildet ist, eine Verbindung mit dem jeweiligen anderen Führungsteil zu ermöglichen.

In einer alternativen Ausführungsvariante weisen das erste und zweite Führungsteil jeweils eine mechanische Schnittstelle zur Verbindung mit mindestens einem Koppelteil des Scheibenführungselements auf, über das eine Verbindung zwischen dem ersten Führungsteil und dem zweiten Führungsteil bereitgestellt wird. Das Scheibenführungselement ist somit in dieser Variante wenigstens 3-teilig. Die ersten und zweiten Führungsteile werden somit über mindestens ein Koppelteil untereinander verbunden. Das separate Koppelteil kann hierbei an dem einen oder anderen Führungsteil nach Art eines Adapters bereits angeordnet sein, bevor die Verbindung mit dem jeweiligen anderen Führungsteil erfolgt.

In einem Ausführungsbeispiel sind das erste, an dem rahmenseitigen Führungselement verschieblich zu positionierende Führungsteil und das zweite, an der Fensterscheibe zu fixierende Führungsteil miteinander verbindbar, und zwar indem eines der Führungsteile an einem Abschnitt des anderen Führungsteils entlang verschoben wird. Ein Zusammenbau des Scheibenführungselements erfolgt in diesem Ausführungsbeispiel somit derart, dass beispielsweise eines der Führungsteile an dem anderen Führungsteil entlang gleitet, um eine vorgegebene Relativlage zu dem anderen Führungsteil einzunehmen, in der die beiden Führungsteile relativ zueinander arretiert werden. Beispielsweise kann hierbei eines der Führungselemente zumindest teilweise in das andere Führungsteil eingeschoben werden.

Erfindungsgemäß ist die Fensterscheibe entlang einer Verstellachse anzuheben und abzusenken, um die Fensteröffnung zu schließen oder freizugeben und das erste Führungsteil und das zweite Führungsteil sind miteinander verbindbar, indem eine Relativbewegung der Führungsteile entlang dieser Verstellachse der Fensterscheibe erfolgt. Beispielsweise erfolgt die Verbindung der ersten und zweiten Führungsteile miteinander, indem
- das bereits verschieblich an dem rahmenseitigen Führungselement gehaltene erste Führungsteil entlang der Verstellachse in Richtung des zweiten Führungsteils geschoben wird und/oder
- das bereits an der Fensterscheibe fixierte zweite Führungsteil mit der Fensterscheibe entlang der Verstellachse in Richtung des ersten Führungsteils geschoben wird.

Hierbei kann eine Verschiebung des zweiten Führungsteils mithilfe des bereits mit der Fensterscheibe gekoppelte Fensterhebers erfolgen, insbesondere fremdkraftbetätigt. Die Fensterscheibe ist hierbei dann üblicherweise bereits an einem von zwei sich an der Fensteröffnung gegenüberliegenden rahmenseitigen Führungselementen verschieblich geführt, bevor durch Verstellung der Fensterscheibe und des hieran fixierten zweiten Führungsteils eine Annäherung an das vorpositionierte und in einer Vormontageposition arretierte erste Führungsteil erfolgt. Eine als vorteilhaft erachtete Ausführungsvariante sieht alternativ oder ergänzend vor, dass
- das erste Führungsteil zunächst an dem rahmenseitigen Führungselement in einer vorgegebenen Vormontageposition arretiert wird,
- dann eine Positionierung der Fensterscheibe mit dem hieran bereits fixierten zweiten Führungsteil erfolgt, so dass die Fensteröffnung von der Fensterscheibe nur teilweise geschlossen ist, und
- anschließend das Scheibenführungselement bestimmungsgemäß zusammengebaut wird, indem das erste Führungsteil entlang des rahmenseitigen Führungselements in Eingriff mit dem zweiten Führungsteil geschoben wird, während die Fensterscheibe und das hieran fixierte zweite Führungsteil in einer eingenommenen Position gehalten werden, beispielsweise mittels des Fahrzeugfensterhebers.

Zur Verkürzung der Montagezeit können das erste Führungsteil und das zweite Führungsteil aneinander steckbar sein. Bei Verwendung eines Koppelteils kann dementsprechend auch vorgesehen sein, dass wenigstens eines der beiden ersten und zweiten Führungsteile oder beide Führungsteile an ein Koppelteil steckbar sind. Die Führungsteile und/oder die Führungsteile und ein Koppelteil sind somit über wenigstens eine Steckverbindung aneinander festzulegen, um das Scheibenführungselement bestimmungsgemäß zusammenzubauen.

Eine Ausführungsvariante einer erfindungsgemäßen Fensterheberbaugruppe sieht vor, dass wenigstens ein Abschnitt eines ersten oder zweiten Führungsteils im zusammengebauten Zustand des Scheibenführungselements in dem anderen, zweiten oder ersten Führungsteil aufgenommen ist. Beispielsweise kann in diesem Zusammenhang vorgesehen sein, dass ein längserstreckter, gegebenenfalls stiftförmiger Einführabschnitt an einem der Führungsteile in eine beispielsweise kanalförmige Aufnahme des anderen Führungsteils eingeschoben wird, um das Scheibenführungselement zusammenzubauen und die Fensterscheibe im Bereich einer vorderen oder hinteren seitlichen Scheibenkante an dem (vorderen oder hinteren) rahmenseitigen Führungselement verschieblich festzulegen.

Bei dem rahmenseitigen Führungselement kann es sich grundsätzlich um ein Führungsprofil mit einem Führungskanal handeln, das an einem Fensterrahmen einer Fahrzeugtürkarosserie ausgebildet ist. Es kann sich aber auch um eine separate Führungsleiste handeln, die an ein (seitliches) Rahmenteil eines solchen Fensterrahmens angebracht ist.

Zur Erleichterung der Montage weist das erste Führungsteil erfindungsgemäß eine Schnittstelle für eine lösbar mit dem ersten Führungsteil zu verbindende Positionierhilfe der Fensterheberbaugruppe auf, wobei über die Positionierhilfe das erste Führungsteil vor dem Zusammenbau des Scheibenführungselements in einer Vormontageposition an dem rahmenseitigen Führungselement gehalten ist. So kann unter Verwendung der Positionierhilfe eine bestimmte Vormontageposition des an dem rahmenseitigen Führungselements bereits verschieblich gehaltenen ersten Führungsteils vorgegeben werden. Die Positionierhilfe gibt hierbei beispielsweise eine genau definierte Vormontageposition an dem rahmenseitigen Führungselement vor und sichert das erste Führungsteil in dieser Vormontageposition.

Zu diesem Zweck kann die Positionierhilfe beispielsweise ein Halteteil umfassen, über das die Positionierhilfe für Montagezwecke mit einem Rahmenteil des Fensterrahmens verbindbar ist. Über das Halteteil ist die Positionierhilfe und das hiermit verbundene erste Führungsteil somit temporär in einer bestimmten Vormontageposition gehalten, bis zum Beispiel eine Verbindung mit dem zweiten Führungsteil erfolgt.

In einer hierauf basierenden Ausführungsvariante weist das Halteteil beispielsweise einen Haltehaken auf, der an einem oberen Rahmenteil des Fensterrahmens eingehängt werden kann um einer Verlagerung des ersten Führungsteils entlang des rahmenseitigen Führungselements unter Wirkung der Schwerkraft entgegenzuwirken.

In einer Ausführungsvariante weist das erste Führungsteil eine Schnittstelle für eine lösbar mit dem ersten Führungsteil zu verbindende Positionierhilfe der Fensterheberbaugruppe auf, wobei die Positionierhilfe eine Handhabe umfasst, mithilfe derer bei der Montage der Fensterheberbaugruppe das mit der Positionierhilfe verbundene erste Führungsteil manuell entlang des rahmenseitigen Führungselements verschoben werden kann. Die Handhabe dient somit während der Montage einer erleichterten manuellen Verschiebbarkeit des ersten Führungsteils, sodass ein Monteur nicht unmittelbar an dem ersten Führungsteil selbst, sondern an der hierfür entsprechend ausgebildeten Handhabe der Positionierhilfe angreifen kann. Eine mit einer derartigen Handhabe ausgestattete Positionierhilfe kann selbstverständlich auch zum Halten des ersten Führungsteils in der Vormontageposition ausgebildet und vorgesehen sein.

Beispielsweise wird das erste Führungsteil über die Positionierhilfe und dessen Halteteil zunächst in der Vormontageposition gehalten. Anschließend wird eine Verbindung des Halteteils mit einem Rahmenteil des Fensterrahmens gelöst und das erste Führungsteil über die Handhabe der Positionierhilfe verschoben, um mit dem zweiten Führungsteil in Eingriff gebracht zu werden und das Scheibenführungselement für die bestimmungsgemäße Führung der Fensterscheibe zusammenzubauen.

In einer Ausführungsvariante weist wenigstens eines der ersten und zweiten Führungsteile mindestens einen elastisch verlagerbaren Verriegelungsabschnitt auf, der eine formschlüssige Verbindung zwischen den ersten und zweiten Führungsteilen oder zwischen einem Koppelteil des Scheibenführungselements und wenigstens einem der ersten und zweiten Führungsteile sichert, wenn die ersten und zweiten Führungsteile an dem zusammengebauten Scheibenführungselement eine vorgegebene Relativlage zueinander einnehmen. So kann der elastisch verlagerbare Verriegelungsabschnitt in eine Verriegelungslage vorgespannt sein, in der der Verriegelungsabschnitt einen Abschnitt des jeweiligen anderen Führungsteils und/oder des Koppelteils hintergreift und derart einen zusammengebauten Zustand des Scheibenführungselements sichert.

Beispielsweise ist der mindestens eine elastisch verlagerbare Verriegelungsabschnitt des ersten oder zweiten Führungsteils ausgebildet, selbsttätig mit einem Abschnitt des anderen, zweiten oder ersten Führungsteils und/oder einem Abschnitt des Koppelteils zu verrasten, wenn die ersten und zweiten Führungsteile die vorgegebene Relativlage zueinander einnehmen. Es wird somit eine Rastverbindung bereitgestellt. Hierbei schnappt beispielsweise ein als Verriegelungshaken oder als Rastnase ausgebildeter Verriegelungsabschnitt in eine Rastöffnung oder in einen Rastspalt ein, sodass hierüber ein Abschnitt des jeweiligen anderen Führungsteils und/oder des Koppelteils hintergriffen wird.

Um zu Montage- und Wartungszwecken eine Demontage der Fensterheberbaugruppe zu erleichtern und insbesondere die Entnahme einer Fensterscheibe aus der Fensteröffnung zu vereinfachen, kann vorgesehen sein, dass eine Verriegelung über den mindestens einen Verriegelungsabschnitt mit einem Entriegelungselement oder einem Entriegelungswerkzeug gezielt lösbar ist. Hierfür ist an wenigstens einem der ersten und zweiten Führungsteile beispielsweise mindestens eine Entriegelungsöffnung vorgesehen, über die an dem zusammengebauten Scheibenführungselement ein Abschnitt eines Entriegelungselements oder ein Abschnitt eines Entriegelungswerkzeugs auf das erste oder zweite Führungsteil einwirken kann, um den Verriegelungsabschnitt zu verlagern und die ersten und zweiten Führungsteile voneinander und/oder das Koppelteil von wenigstens einem der ersten und zweiten Führungsteile trennen zu können. Das Scheibenführungselement ist somit mit seinen ersten und zweiten Führungsteilen zum Beispiel derart ausgebildet, dass das Entriegelungselement mit zumindest einem Abschnitt in das Innere des Scheibenführungselements einschiebbar ist, um eine über den mindestens einen Verriegelungsabschnitt bereitgestellte Rastverbindung zu lösen. Dabei kann durch das Entriegelungselement oder Entriegelungswerkzeug beispielsweise ein hakenförmiger Verriegelungsabschnitt gezielt außer Eingriff mit einer Rastöffnung oder einem Rastspalt gebracht werden.

Insbesondere bei aneinander steckbaren Führungsteilen, die über mindestens einen Verriegelungsabschnitt miteinander verrastet sind, bietet sich die zusätzliche Verwendung eines Sicherungselements an dem Scheibenführungselement an. Das Sicherungselement sperrt dabei den mindestens einen elastisch verlagerbaren Verriegelungsabschnitt gegen eine Verlagerung aus einer Rastposition, in der der Verriegelungsabschnitt mit dem anderen, zweiten oder ersten Führungsteil und/oder dem Koppelteil verrastet ist. Ein entsprechendes Sicherungselement des Scheibenführungselements liegt somit in einem zusammengebauten Zustand des Scheibenführungselements in einer Sicherungsposition vor, in der das Sicherungselement eine Verlagerung des mindestens einen Verriegelungsabschnitts aus seiner Rastposition blockiert und damit eine Trennung der ersten und zweiten Führungsteile voneinander verhindert. Ist die Fensterscheibe somit im Bereich des zusammengebauten Scheibenführungselements bestimmungsgemäß an dem rahmenseitigen Führungselement verschieblich gelagert, können die Teile des Scheibenführungselements nicht mehr ohne Weiteres voneinander gelöst werden. Das Sicherungselement dient folglich als (zusätzliche) Sicherung des zusammengebauten Zustandes.

Zu diesem Zweck kann das Sicherungselement beispielsweise einen - in einer Variante konusförmigen - Sicherungsabschnitt umfassen, der eingesteckt in eine Öffnung oder einen Kanal, die oder der von dem Verriegelungsabschnitt berandet wird, den Verriegelungsabschnitt gegen eine Verlagerung sperrt. Über den in die Öffnung oder den Kanal eingesteckten Sicherungsabschnitt kann hierbei zum Beispiel eine Verlagerung des Verriegelungsabschnitts aus seiner Rastposition in Richtung einer Öffnungs- oder Kanalmitte blockiert werden.

Das Sicherungselement kann an einem der ersten oder zweiten Führungsteile oder einem Koppelteil verstellbar gelagert sein, beispielsweise über ein Gelenk, insbesondere ein Scharniergelenk, wie zum Beispiel ein Filmscharnier. In einer Variante kann das Sicherungselement zwischen wenigstens einer Montageposition und einer Sicherungsposition verstellbar sein. In der Montageposition des Sicherungselements wird beispielsweise das Aneinanderstecken der Führungsteile gestattet. In der Sicherungsposition wirkt dann das Sicherungselement auf den mindestens einen Verriegelungsabschnitt ein und sperrt diesen gegen eine Verlagerung aus einer selbsttätig eingenommenen Rastposition. In einer Ausgestaltung ist das Sicherungselement einteilig mit einem ersten oder zweiten Führungsteil oder dem Koppelteil ausgebildet Bei einer einteiligen Ausführung von Führungsteil und Sicherungselement ist beispielsweise ein Filmscharnier an einem Führungsteil für die Verstellbarkeit des Sicherungselements ausgeformt.

In einer alternativen Ausführungsvariante ist das Sicherungselement als separates Bauteil ausgebildet, das mit wenigstens einem der Führungsteile und/oder einem Koppelteil verbindbar ist, nachdem der mindestens eine Verriegelungsabschnitt seine Rastposition eingenommen hat. Das Sicherungselement bildet somit ein weiteres separates Bauteil des mehrteiligen Scheibenführungselements.

Über das zusammengebaute Scheibenführungselement ist in einem Ausführungsbeispiel eine körperliche Führung der Fensterscheibe an dem rahmenseitigen Führungselement sowohl entlang einer ersten Querrichtung, die sich im Wesentlichen parallel zu einer durch die Fensterscheibe definierten Scheibenebene (und hierbei vorzugsweise auch quer zur Verstellungsachse der Fensterscheibe) erstreckt, als auch entlang einer zweiten Querrichtung, die sich im Wesentlichen senkrecht zu der Scheibenebene erstreckt, bereitgestellt. Ein solches mehrteilig ausgebildetes Scheibenführungselement ist in einer Ausführungsvariante an einer Fahrzeugtür nur im Bereich eines von zwei sich an der Fensteröffnung oberhalb der Brüstung gegenüberliegenden, rahmenseitigen Führungselementen angeordnet. Üblicherweise wird bei flächenbündigen Scheibenkonzepten, um einen Toleranzausgleich zu ermöglichen, nur im Bereich einer (vorderen oder hinteren) seitlichen Scheibenkante über ein Scheibenführungselement eine körperliche Führung entlang beider möglicher Querrichtungen senkrecht zur Verstellungsachse der Fensterscheibe bereitgestellt, während an der gegenüberliegenden (hinteren oder vorderen) seitlichen Scheibenkante nur eine Führung entlang einer Querrichtung senkrecht zur Scheibenebene erfolgt. Zum Beispiel ist ein erfindungsgemäß ausgestaltetes Scheibenführungselement an einer Fensteröffnung einer Fahrzeugtür an der B-säulennahen seitlichen Scheibenkante der Fensterscheibe vorgesehen. Dies schließt jedoch selbstverständlich nicht aus, dass an beiden sich gegenüberliegenden seitlichen Scheibenkanten jeweils wenigstens ein erfindungsgemäß mehrteilig ausgeführtes Scheibenführungselement vorgesehen ist.

An dem ersten, mit dem Führungsabschnitt ausgebildeten ersten Führungsteil kann ein Federelement zur elastischen Abstützung des Scheibenführungselements an dem rahmenseitigen Führungselement vorgesehen sein. Über das Federelement wird hierbei eine elastische Abstützung im Wesentlichen senkrecht zur Verstellachse der Fensterscheibe erreicht, um Toleranzen auszugleichen und im Betrieb des Fahrzeugfensterhebers Klappergeräusche zu vermeiden. Beispielsweise kann ein entsprechendes Federelement durch einen Federbogen an dem ersten Führungsteil ausgebildet sein, der an einer Wandung des rahmenseitigen Führungselements anliegt und zumindest geringfügig entgegen einer Vorspannkraft belastet ist, wenn das Scheibenführungselement bestimmungsgemäß zusammengebaut und an dem rahmenseitigen Führungselement verschieblich gehalten ist.

Ein weiterer Aspekt der Erfindung ist die Bereitstellung eines verbesserten Verfahrens zur Montage einer Fensterheberbaugruppe.

Ein erfindungsgemäßes Montageverfahren ist hierbei zur Montage einer erfindungsgemäß ausgestalteten Fensterheberbaugruppe geeignet, sodass vorstehend und nachstehend erläuterte Vorteile und Merkmale von Ausführungsvarianten einer erfindungsgemäßen Fensterheberbaugruppe auch für Ausführungsvarianten eines erfindungsgemäßen Montageverfahrens gelten und umgekehrt.

Ein erfindungsgemäßes Montageverfahren zeichnet sich hierbei grundsätzlich dadurch aus, dass bei einem mehrteilig ausgeführten Scheibenführungselement ein erstes Führungsteil einen Führungsabschnitt des Scheibenführungselements ausbildet, um das Scheibenführungselement an einem seitlichen, rahmenseitigen Führungselement eines Fensterrahmens verschieblich zu halten, und dass das erste Führungsteil über den Führungsabschnitt verschieblich an dem rahmenseitigen Führungselement (vor-) positioniert wird. Ein zweites Führungsteil des Scheibenführungselements bildet ferner für die Verbindung des Scheibenführungselements mit der Fensterscheibe einen Verbindungsabschnitt aus, über den das zweite Führungsteil an der Fensterscheibe unabhängig von dem ersten Führungsteil fixiert wird. Erfindungsgemäß wird das Scheibenführungselement mit den ersten und zweiten Führungsteilen erst zusammengebaut, nachdem das erste Führungsteil an dem rahmenseitigen Führungselement definiert wurde und nachdem hiervon unabhängig das zweite Führungsteil an der Fensterscheibe fixiert wurde. Das erste und zweite Führungsteil werden somit als separate Bauteile und noch nicht miteinander verbunden einerseits an der Fensterscheibe und andererseits an dem rahmenseitigen Führungselement angeordnet und erst im Anschluss daran miteinander verbunden, gegebenenfalls unter Verwendung eines zusätzlichen Koppelteils des Scheibenführungselements.

Zum Zusammenbau des Scheibenführungselements können das an dem rahmenseitigen Führungselement positionierte erste Führungsteil und das an der Fensterscheibe fixierte zweite Führungsteil auch unmittelbar miteinander verbunden werden, insbesondere indem die beiden Führungsteile miteinander verrastet werden.

Zur Sicherung einer vorgegebenen Relativlage der ersten und zweiten Führungsteile zueinander kann wenigstens ein Abschnitt eines Sicherungselements des Scheibenführungselements in eine Öffnung oder einen Kanal des ersten oder zweiten Führungsteils eingesteckt werden, insbesondere nachdem die Fensterscheibe bestimmungsgemäß montiert wurde. Über das Sicherungselement kann hierbei beispielsweise die Verlagerung eines Verriegelungsabschnitts gesichert und damit einem unbeabsichtigten Lösen einer über mindestens einen solchen Verriegelungsabschnitt bereitgestellten federelastischen Clipsverbindung entgegengewirkt werden

Anhand der beigefügten Figuren werden mögliche Ausführungsvarianten der erfindungsgemäßen Lösung näher veranschaulicht.

Es zeigen:
- Figur 1A: in Seitenansicht eine Fahrzeugtür mit einer erfindungsgemäß ausgestalteten Fensterheberbaugruppe;
- Figur 1B: in vergrößertem Maßstab Details der Fensterheberbaugruppe während der Montage der Fensterscheibe und einem mittels einer Positionierhilfe in einer Vormontageposition gehaltenen ersten Führungsteil eines hinteren, zweiteilig ausgeführten Scheibenführungselements;
- Figuren 2A-2H: Details zu dem Scheibenführungselement der Fensterheberbaugruppe der Figuren 1A und 1B in unterschiedlichen Ansichten und einerseits in einem nicht zusammengebauten Zustand (Figuren 2A, 2B, 2F, 2G und 2H) und einem zusammengebauten Zustand (Figuren 2C, 2D und 2E);
- Figur 3A: eine Schnittdarstellung der montierten Fensterscheibe im Bereich des zweiteilig ausgeführten und bestimmungsgemäß zusammengebauten Scheibenführungselements;
- Figur 3B: die Fensterscheibe mit einem hieran fixierten zweiten Führungsteil des Scheibenführungselements und getrennt hiervon das an einem rahmenseitigen Führungselement der Fensterheberbaugruppe bereits positionierte erste Führungsteil des Scheibenführungselements;
- Figuren 4A-4D: in verschiedenen Ansichten Details einer Positionierhilfe der Fensterheberbaugruppe, über die das erste Führungsteil des Scheibenführungselements bis zur Montage der Fensterscheibe an einen Fensterrahmen der Fahrzeugtür in einer Vormontageposition gehalten ist und über die das erste Führungsteil danach manuell in Eingriff mit dem zweiten, an der Fensterscheibe fixierten Führungsteil des Scheibenführungselements verschieblich ist;
- Figuren 5A bis 5F: in verschiedenen Ansichten eine weitere Ausführungsvariante eines zweiteiligen Scheibenführungselements, bei dem eine Rastverbindung zwischen den zwei Führungsteilen über ein separates Entriegelungselement lösbar ist;
- Figuren 6A-6C: in verschiedenen Ansichten und Phasen während der Montage ein Ausführungsbeispiel eines 3-teiligen Scheibenführungselements, das als ein Teil ein separat an die beiden miteinander verrasteten Führungsteile steckbares Sicherungselement aufweist;
- Figuren 7A-7D: eine weitere Ausführungsvariante eines zweiteiligen Scheibenführungselements, bei dem ein Sicherungselement einteilig mit einem der Führungsteile ausgebildet, jedoch hieran über ein Filmscharnier verschwenkbar gelagert ist;
- Figuren 8A-8F: in verschiedenen Ansichten und Phasen während einer Montage und Demontage ein weiteres Ausführungsbeispiel eines zweiteiligen Scheibenführungselements, bei dem eine Rastverbindung zwischen zwei Führungsteilen durch Drehen eines Entriegelungswerkzeugs lösbar ist;
- Figuren 9A-9G: in verschiedenen Ansichten und Phasen während der Montage ein 3-teiliges Scheibenführungselement, bei dem das an der Fensterscheibe fixierte zweite Führungsteil einen kreiszylindrischen Hülsenabschnitt zur Aufnahme eines kreiszylindrischen und mehrfache geschlitzten Einführabschnitt des ersten Führungsteils ausbildet und bei dem zur Sicherung der miteinander verrasteten ersten und zweiten Führungsteile ein separates Sicherungselement vorgesehen ist, das in den Einführabschnitt des ersten Führungsteils eingesteckt wird.

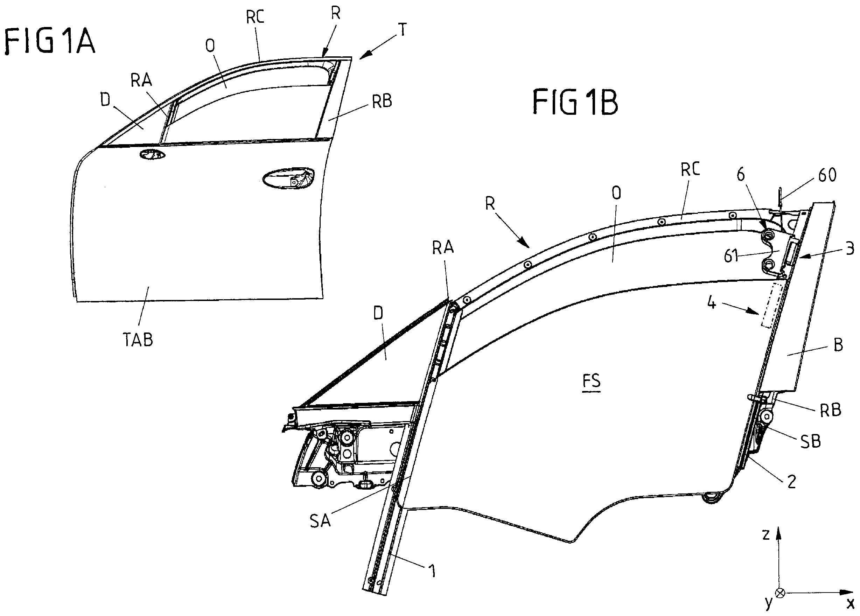

Die Figuren 1A bis 4D zeigen in unterschiedlichen Ansichten und Maßstäben ein erstes Ausführungsbeispiel einer erfindungsgemäßen Fensterheberbaugruppe für eine Fahrzeugtür T, mit einer mittels eines Fensterhebers manuell oder fremdkraftbetätigt verstellbaren Fensterscheibe FS, die in einem geschlossenen Zustand flächenbündig mit oberen und/oder seitlichen Karosserieteilen abschließt und damit Teil eines sogenannten flächenbündigen Scheibenkonzepts (mithin eines sogenannten "flush glass"- oder "flush glazing"-Konzeptes) ist. Ist die Fensterscheibe FS vollständig geschlossen, schließen sich hieran flächenbündig sowohl eine Blende B an einem bezogen auf die Fahrzeuglängsachse hinteren, seitlichen Rahmenteil RB eines Fensterrahmens R der Fahrzeugtür T als auch an der gegenüberliegenden Seite ein Spiegeldreieck D der Fahrzeugtür T an. Auch zur Oberseite im Bereich eines oberen Rahmenteils RC des Fensterrahmens R, das auch als oberer Türrahmen bezeichnet wird, schließt sich bei geschlossener Fahrzeugtüren flächenbündig ein Karosserieteil an, sodass der Eindruck einer durchgehend verlaufenden, ebenen Scheiben- und Karosseriefläche an der Fahrzeugseite erweckt wird. Die Fensterscheibe FS schließt dabei in einer maximal angehobenen Position eine oberhalb einer Brüstung der Fahrzeugtür T definierte Fensteröffnung O des Fensterrahmens R in der Fahrzeugtür T.

Bei bisher üblichen flächenbündigen Scheibenkonzepten muss die Fensterscheibe FS regelmäßig unterhalb des Brüstungsbereichs der Fahrzeugtür T in seitliche Führungselemente des Fensterrahmens R eingeschoben werden. Hierbei sind an sich gegenüberliegenden seitlichen Scheibenkanten SA und SB der Fensterscheibe FS Scheibenführungselemente fixiert. Diese sind an der dem Fahrzeuginnenraum zugewandten Innenseite der Fensterscheibe FS fixiert und verschieblich an den rahmenseitigen Führungselementen im Bereich seitlicher Rahmenteile RA und RB des Fensterrahmens R geführt. Für das Einschieben der Fensterscheibe FS mit ihren hieran fixierten Scheibenführungselementen ist eine Türaußenhaut der Fahrzeugtür T, hier in Form eines Türaußenblechs TAB, üblicherweise abnehmbar ausgestaltet. Nach der Montage der Fensterscheibe FS kann die Türaußenhaut TAB hier somit nachträglich mit der Türkarosserie der Fahrzeugtür T verbunden werden. Hiermit ist jedoch ein aufwändiges Türkonzept verbunden, da ein übliches Türkonzept mit einem zweischalig gepressten Türrahmen und fest aneinander fixierter Türinnenhaut und Türaußenhaut nicht eingesetzt werden kann.

In dieser Hinsicht schafft die erfindungsgemäße Lösung Abhilfe, die in einer Ausführungsvariante in der Figur 1B während der Montage der Fensterscheibe FS veranschaulicht ist.

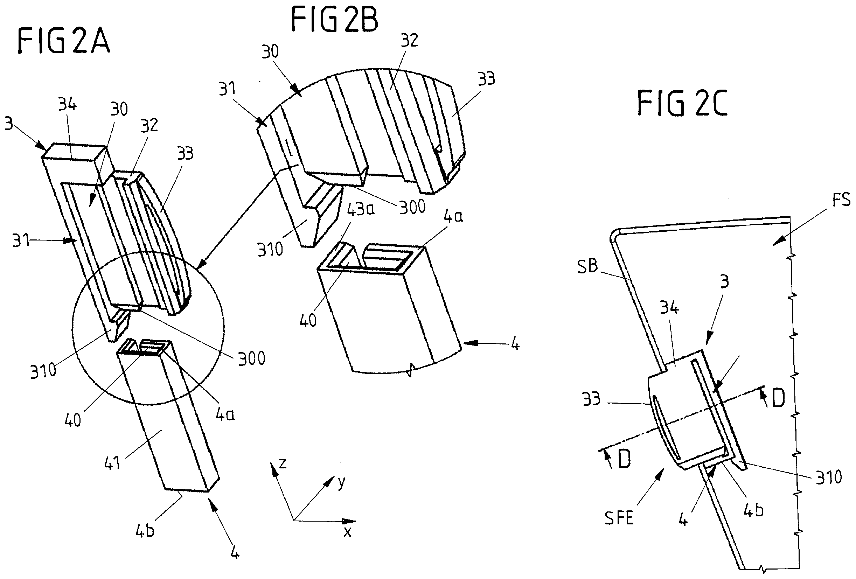

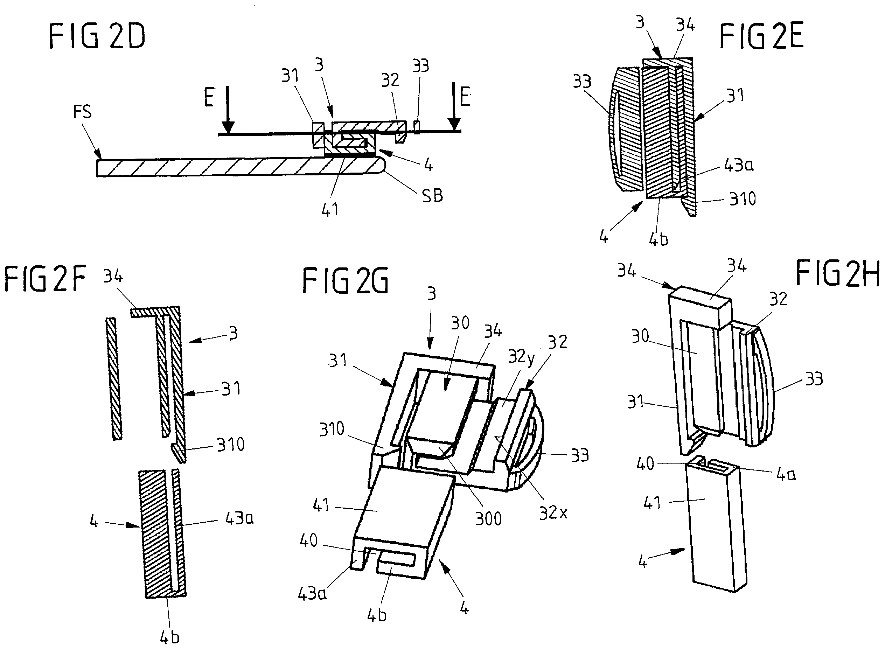

Die Figur 1B zeigt den Fensterrahmen R der Fahrzeugtür T der Figur 1A in Einzeldarstellung. Die Fensterscheibe FS ist im Bereich ihrer vorderen Scheibenkante SA bereits über ein hier nicht näher dargestelltes Scheibenführungselement an einem ersten Führungselement 1, zum Beispiel in Form einer Führungsleiste, an dem vorderen seitlichen Rahmenteil RA des Fensterrahmens R bestimmungsgemäß verschieblich geführt. Um hierbei das Einsetzen der Scheibe FS oberhalb der Brüstung zu ermöglichen, ist die Fensterscheibe FS an der hinteren seitlichen Scheibenkante SB über ein mehrteiliges Scheibenführungselement SFE (vergleiche insbesondere Figur 2C) verschieblich an einem zweiten Führungselement 2 des hinteren seitlichen Rahmenteils RB geführt, wenn die Fensterheberbaugruppe bestimmungsgemäß montiert ist.

Um hierbei zu vermeiden, dass die Fensterscheibe FS von unten in das zweite hintere Führungselement 2 und einen hieran ausgebildeten Führungskanal eingefädelt werden muss, weist das Scheibenführungselement SFE für die hintere Scheibenkante SB, die im eingebauten Zustand nahe der B-Säule des Fahrzeugs angeordnet ist, zwei miteinander zu verbindende Führungsteile 3 und 4 auf.

Ein erstes Führungsteil 3 ist dabei unabhängig von einem zweiten Führungsteil 4 und damit separat an dem zweiten Führungselement 2 verschieblich vorpositionierbar. Zur Vorpositionierung ist eine nachfolgend noch näher erläuterte Positionierhilfe 6 vorgesehen, die das erste Führungsteil 3 in seiner Vormontageposition hält, bis die Fensterscheibe FS an dem Fensterrahmen R angeordnet wurde.

Das zweite Führungsteil 4 ist zur Fixierung an der Innenseite der Fensterscheibe FS nahe der hinteren Scheibenkante SB vorgesehen. Dabei steht das zweite Führungsteil 4 über die hintere seitliche Scheibenkante SB nicht hervor, sodass die Fensterscheibe FS problemlos im Bereich der Fensteröffnung O an den Fensterrahmen R angesetzt werden kann. Ist die Fensterscheibe FS an dem hinteren Rahmenteil RB angeordnet, wird das erste Führungsteil 3 entlang des rahmenseitigen Führungselements 2 in Richtung des zweiten, an der Fensterscheibe FS fixierten Führungsteils 4 verschoben, bis die beiden Führungsteile 3 und 4 verrasten und derart das Scheibenführungselement SFE zusammengebaut ist.

Anhand der Figuren 2A bis 2H ist in unterschiedlichen Ansichten das Scheibenführungselement SFE mit seinen ersten und zweiten Führungsteilen 3 und 4 im Detail veranschaulicht.

Das erste, an dem rahmenseitigen Führungselement 2 vorzupositionierende Führungsteil 3 weist unter anderem einen längserstreckten, stiftförmigen Einführabschnitt in Form eines Einführzapfens 30 auf, der in das hülsenförmige zweite Führungsteil 4 eingeschoben werden kann. Um das Einschieben des Einführzapfens 30 hierbei in einen korrespondierenden Aufnahmekanal 40 des zweiten Führungsteils 4 zu erleichtern, weist der Einführzapfen 30 an seinem in Richtung des zweiten Führungsteils 4 weisenden Ende einen Einführkonus 300 mit angeschrägten Seitenflächen auf. Zur Erleichterung des Einführens des Einführzapfens 30 weisen auch die Innenwandungen des Aufnahmekanals 40 des zweiten Führungsteils 4 an einer dem ersten Führungsteil 3 zugewandten Stirnseite 4a Anschrägungen auf (vergleiche insbesondere die vergrößerte Darstellung der Figur 2B).

An dem ersten Führungsteil 3 ist ferner ein Führungsabschnitt 32 vorgesehen, der einen Eingriff des ersten Führungsteils 3 in einen Führungskanal 20 des als Führungsleiste ausgeführten rahmenseitigen Führungselements 2 ermöglicht. Über den Führungsabschnitt 32 wird im bestimmungsgemäß zusammengebauten Zustand des Scheibenführungselements SFE und bei bestimmungsgemäß montierter Fensterscheibe FS über zwei im Wesentlichen senkrecht zueinander verlaufende Führungsflächen 32x und 32y eine körperliche Führung der Fensterscheibe FS an dem rahmenseitigen Führungselement 2 sowohl entlang einer im Wesentlichen parallel zur Scheibenebene der Fensterscheibe FS verlaufenden und nach hinten weisenden ersten Querrichtung X als auch entlang einer im Wesentlichen senkrecht zur Scheibenebene verlaufenden, nach innen weisenden zweiten Querrichtung Y bereitgestellt. Beide Richtungen X und Y verlaufen hierbei senkrecht zu der durch die beiden Führungselemente 1 und 2 definierten Verstellachse der Fensterscheibe FS, entlang der die Fensterscheibe FS in einer Richtung +Z angehoben und in einer Richtung -Z abgesenkt werden kann.

Im bestimmungsgemäß zusammengebauten Zustand des Scheibenführungselements SFE steht der Führungsabschnitt 32 des ersten Führungsteils 3 über die hintere seitliche Scheibenkante SB an der Innenseite der Fensterscheibe FS in X-Richtung vor, um in den seitlichen Führungskanal 20 eingreifen zu können. An dem Führungsabschnitt 32 ist ferner ein Federelement in Form eines Federbogens 33 ausgebildet. Über diesen Federbogen 33 stützt sich das erste Führungsteil 3 - und damit im zusammengebauten Zustand das Scheibenführungselement SFE - entlang der Querrichtung X an einer Wandung des Führungskanals 20 ab. Über diese federelastische Abstützung werden Klappergeräusche im Betrieb vermieden und es können quer zur Verstellachse Toleranzen ausgeglichen werden.

Die ersten und zweiten Führungsteile 3 und 4 sind vorliegend entlang der Verstellachse der Fensterscheibe FS zueinander verschieblich und können bei ausreichender Annäherung aneinander miteinander verrastet werden. Hierbei ist das erste Führungsteil 3 über seinen Einführzapfen 30 an das zweite Führungsteil 4 steckbar. Ist der Einführzapfen 30 so weit in den Aufnahmekanal 40 des zweiten Führungsteils 4 eingeschoben, dass die dem ersten Führungsteil 3 zugewandte (obere) Stirnseite 4a des zweiten Führungsteils an einem Endkörper 34 des ersten Führungsteils 3 anschlägt, verrasten die beiden Führungsteile 3 und 4 über einen Verriegelungsabschnitt in Form eines Verriegelungshaken 310 miteinander. Dieser Verriegelungshaken 310 hintergreift im bestimmungsgemäß zusammengebauten Zustand des Scheibenführungselements SFE einen Raststeg 43a des zweiten Führungsteils 4 an der dem ersten Führungsteil 3 abgewandten (unteren) Stirnseite 4b des zweiten Führungsteils 4. Hierbei ist der Verriegelungshaken 310 an einem längserstreckten Federsteg 31 des ersten Führungsteils 3 ausgebildet, der parallel zu dem Einführzapfen 30 verläuft. Über den Federsteg 31 ist der Verriegelungshaken 310 in eine Rastposition vorgespannt, sodass der Verriegelungshaken 310 mit dem hier eine Außenwand des zweiten Führungsteils 4 bildenden Raststeg 43a des zweiten Führungsteils 4 an dessen unteren Stirnseite 4b selbsttätig verrastet, wenn erste Führungsteil 3 mit seinem Einführzapfen 30 ausreichend weit in das zweite Führungsteil 4 eingesteckt wurde. Dann hintergreift der Verriegelungshaken 310 den seitlichen Raststeg 43a des zweiten Führungsteils 4 und die beiden Führungsteile 3 und 4 sind bestimmungsgemäß miteinander verrastet und nicht mehr ohne Weiteres voneinander lösbar.

Über die beiden Führungsteile 3 und 4 wird somit ein mehrteiliges Scheibenführungselement SFE, dementsprechend ein mehrteiliges sogenanntes "Pin guide"-Element bereit gestellt, dessen Führungsteile 3 und 4 erst miteinander verbunden, werden, nachdem das eine Führungsteil 3 an dem rahmenseitigen Führungselement 2 vorpositioniert wurde und das andere Führungsteil 4 an der Fensterscheibe FS fixiert wurde. Dabei wird das zur Fixierung an der Fensterscheibe FS vorgesehene zweite Führungsteil 4 vorliegend über einen Verbindungsabschnitt 41 mittels einer Klebung flächig an der Innenseite der Fensterscheibe FS nahe der hinteren seitlichen Scheibenkante SB fixiert.

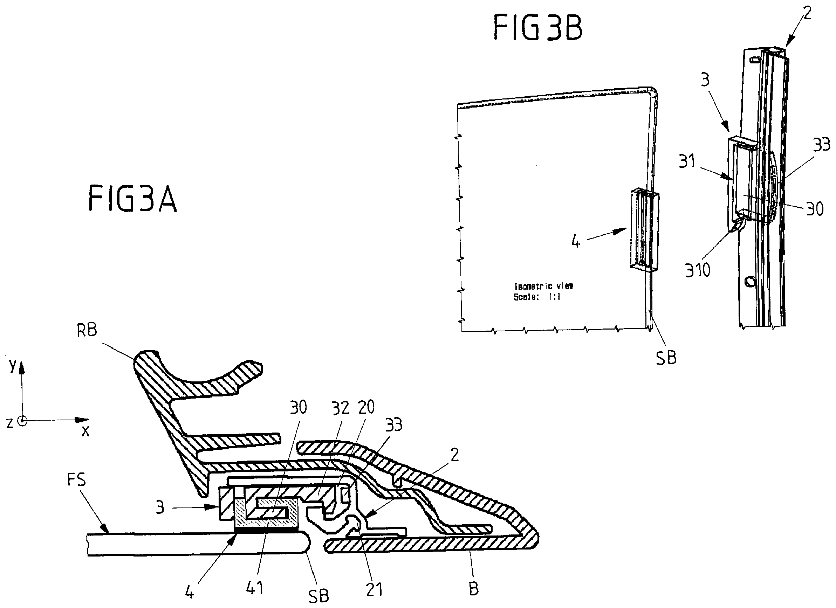

Anhand der Figuren 3A und 3B wird die räumliche Anordnung der beiden Führungsteile 3 und 4 näher veranschaulicht. So ist insbesondere aus der Schnittdarstellung der Figur 3A ersichtlich, wie das zweite, an die Fensterscheibe FS geklebte Führungsteil 4 über die hintere, seitliche Scheibenkante SB nicht hervorsteht, um die Fensterscheibe FS an der hinteren Scheibenkante SB nicht in den Führungskanal 20 einfädeln zu müssen. Derart kann die Fensterscheibe FS mit einem oder mehreren an ihrer vorderen Scheibenkante SA vorgesehenen Scheibenführungselementen bequem entlang der Richtung -X in einen Führungskanal des vorderen, rahmenseitigen Führungselements 1 eingesteckt werden. Erst im Anschluss erfolgt eine nachträgliche Festlegung an dem hinteren rahmenseitigen Führungselement 2, indem das hieran bereits verschieblich gelagerte erste Führungsteil 3 an das zweite Führungsteil 4 gesteckt und hiermit verrastet wird. Nachträglich oder zuvor kann an einer Dichtungsschnittstelle 21 des hinteren Führungselements 2 noch eine Spaltdichtung vorgesehen werden.

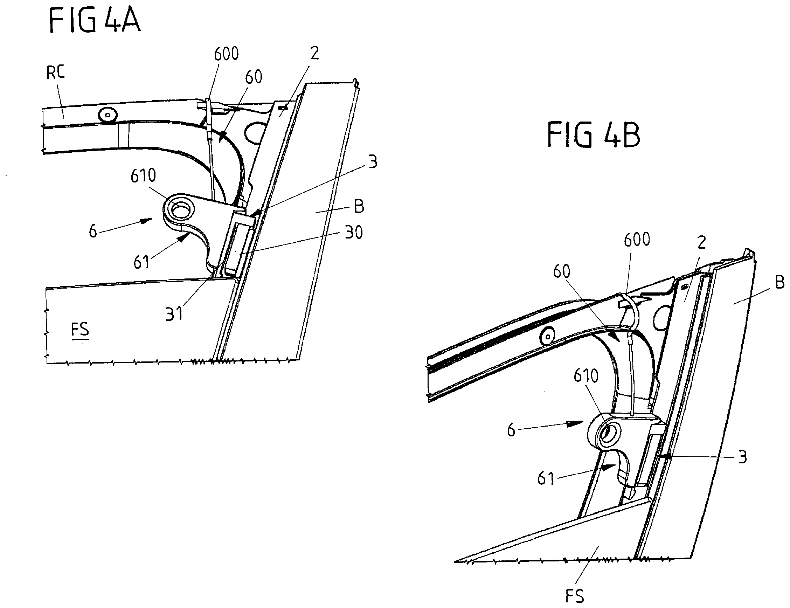

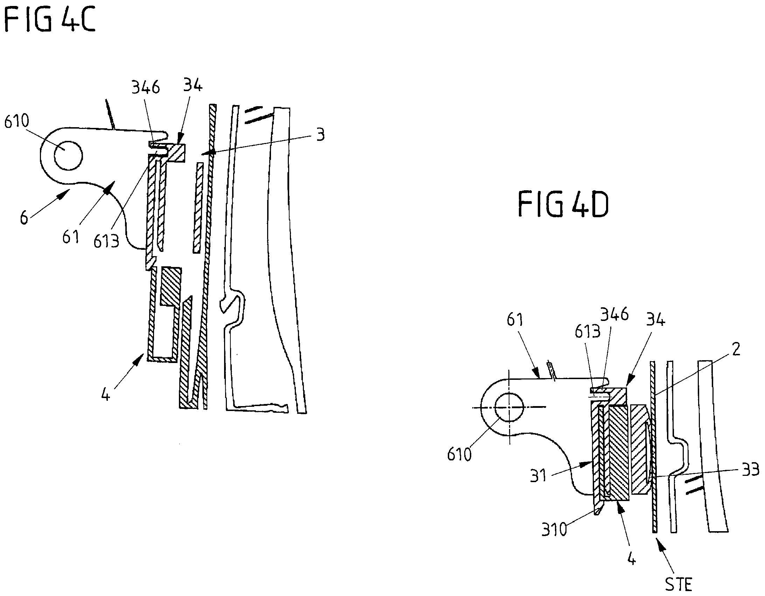

Um das erste Führungsteil 3 in einer vorgegebenen Vormontageposition an dem hinteren Führungselement 2 zu halten, nachdem das erste Führungsteil 3 über seinen Führungsabschnitt 32 in den Führungskanal 20 eingeschoben, eingesteckt oder eingedreht wurde, kann vorgesehen sein, dass das erste Führungsteil 3 allein aufgrund der Reibungskräfte unter Einwirkung der Schwerkraft in der Vormontageposition gehalten ist. Zur Erhöhung der Prozesssicherheit ist erfindungsgemäß eine Positionierhilfe 6 vorgesehen, deren Funktionsweise anhand der Figuren 4A bis 4D näher veranschaulicht ist.

So weist das erste Führungsteil 3 im Bereich des Endkörpers 34 eine Schnittstelle für die Positionierungshilfe 6 in Form einer Stecköffnung 346 auf. In diese Stecköffnung 346 wird quer zur Verstellachse der Fensterscheibe FS und somit quer zur Erstreckungsrichtung des Einführzapfens 30 des ersten Führungsteils 3 ein Einsteckzapfen 613 der Positionierhilfe 6 eingesteckt. Derart ist die Positionierhilfe 6 formschlüssig an dem ersten Führungsteil 3 gehalten. Von dem an das erste Führungsteil 3 gesteckten Abschnitt der Positionierhilfe 6 erstreckt sich ein Halteteil, hier in Form eines Haltestabs oder Halteseils 60. Am Ende dieses Haltestabs oder Halteseils 60 ist ein Haltehaken 600 vorgesehen, der an das obere Rahmenteile RC gehängt werden kann. Hierüber hängt die Positionierhilfe 6 folglich an dem oberen Rahmenteil RC und verhindert ein Verschieben des in den Führungskanal 20 eingreifenden ersten Führungsteils 3 unter Einwirkung der Schwerkraft. Das erste Führungsteil 3 ist somit dank der Positionierhilfe 3 in einer definierten Vormontageposition nahe des oberen Rahmenteils RC gehalten.

Wird die Fensterscheibe FS mit dem hieran fixierten zweiten Führungsteil 4 des Scheibenführungselements SFE im Anschluss an den Fensterrahmen R angesetzt, wird die Fensterscheibe FS - zum Beispiel über den an der Fensterscheibe FS bereits angreifenden, vorzugsweise elektromotorisch angetriebenen Fahrzeugfensterheber - in einer teilweise geöffneten Lage gehalten. Um die Fensterscheibe FS dann mit ihrer hinteren Scheibenkante SB an dem hinteren rahmenseitigen Führungselement 2 festzulegen, wird die Positionierhilfe 6 ausgehängt, sodass die Positionierhilfe 6 zusammen mit dem erstem Führungsteil 3 entlang des Führungskanals 20 nach unten in Richtung -Z verschoben werden kann Um dabei ein manuelles Verschieben des ersten Führungsteils 3 in Richtung des an der Fensterscheibe FS fixierten zweiten Führungsteils 4 zu erleichtern, bildet die Positionierhilfe 6 eine Handhabe 61 mit einer Grifföffnung 610 aus. Hierüber wird das erste Führungsteil 3 an das zweite Führungsteil 3 gesteckt und sein Einführzapfen 30 in den Aufnahmekanal 40 des zweiten Führungsteils 4 eingeschoben, bis die beiden Führungsteile 3 und 4 über den Verriegelungshaken 310 selbsttätig miteinander verrasten. Anschließend wird die Positionierhilfe 6 von dem ersten Führungsteil 3 entfernt. Die Positionierhilfe 6 ist somit in der dargestellten

Ausführungsvariante nur temporär, zu Montagezwecken mit dem ersten Führungsteil 3 lösbar verbunden, um dessen Vormontageposition vorzugeben und beim Zusammenbau des Scheibenführungselements SFE dessen Verschieben entlang des hinteren Führungselements 2 zu erleichtern.

Alternativ zu der dargestellten Ausführungsvariante mit einer an das obere Rahmenteil RC angehängten Positionierhilfe 6 kann diese beispielsweise auch an dem seitlichen Rahmenteil RB oder an dem hinteren Führungselement 2 gehalten sein. Eine Variante sieht z.B. eine Verrastung einer Positionierhilfe an dem Führungskanal 20 vor, um das erste Führungsteil 3 in seiner Vormontageposition zu sichern.

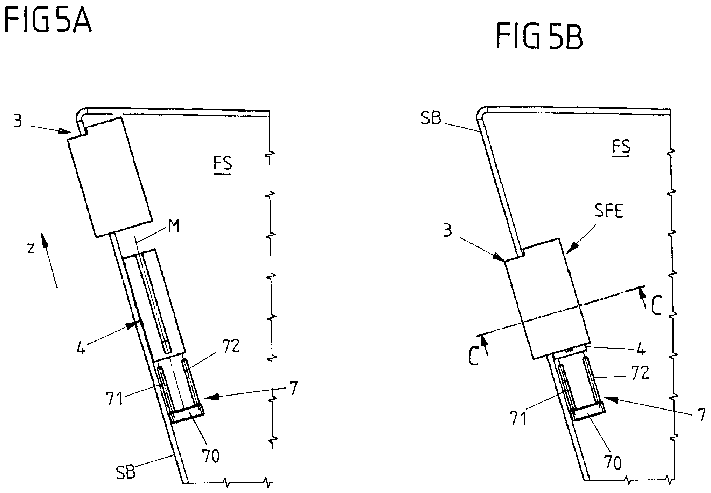

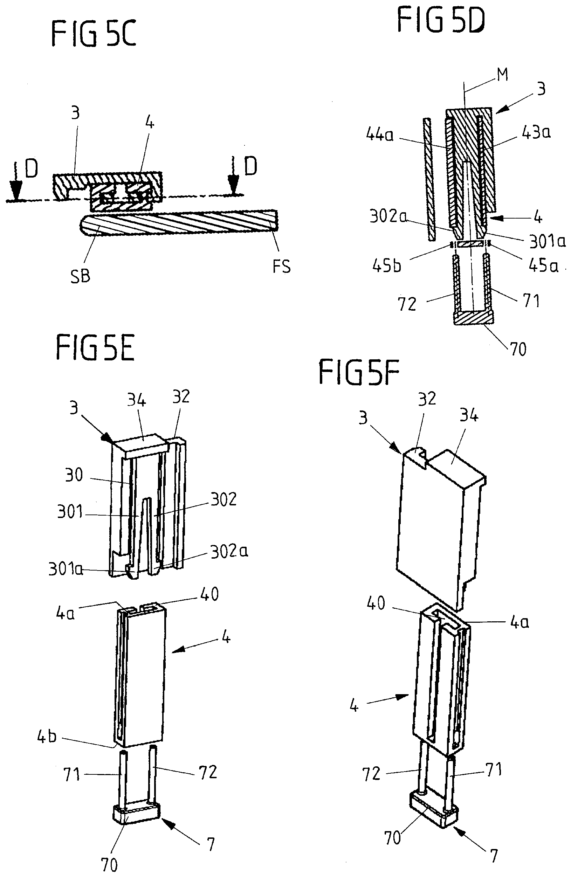

Die Figuren 5A bis 5F zeigen eine weitere Ausführungsvariante eines Scheibenführungselements SFE, bei dem das erste Führungsteil 3 an seinem Einführzapfen 30 zwei Federstege 301 und 302 mit Verriegelungshaken 301a und 302a ausbildet. Die Federstege 301 und 302 werden somit bei der Verbindung der beiden Führungsteile 3 und 4 in den Aufnahmekanal 40 des zweiten Führungsteils 4 eingeschoben. Die am Ende der Federstege 301 und 302 ausgebildeten Verriegelungshaken 301a und 302a sind hierbei in zueinander entgegengesetzte Richtungen nach außen vorgespannt, sodass innerhalb des Aufnahmekanals 40 zusammen gedrückt werden. Ist das erste Führungsteil 3 maximal in das zweite Führungsteil 4 eingeschoben und liegen damit die beiden Führungsteile 3 und 4 in einer finalen Relativlage zueinander vor, verrasten die Verriegelungshaken 301a und 302a selbsttätig mit einander gegenüberliegenden Raststegen 43a und 44a des zweiten Führungsteils 4, indem sie in einer seitlichen Wandung jeweils ausgebildete Rastöffnungen des zweiten Führungsteils 4 einschnappen.

Die voneinander weg gespreizten Verriegelungshaken 301a und 302a sind hier somit an dem zusammengebauten Scheibenführungselement SFE in dem Aufnahmekanal 40 des zweiten Führungsteils 4 aufgenommen und somit von außerhalb des Scheibenführungselements SFE nicht oder kaum zugänglich. Um bei einer solchen Rastverbindung zwischen den beiden Führungsteilen 3 und 4 eine Demontage des Scheibenführungselements SFE für Wartungs- oder Reparaturzwecke zu ermöglichen, ist ein an das Scheibenführungselement SFE steckbares Entriegelungselement 7 vorgesehen.

Dieses Entriegelungselement 7 ist im Querschnitt U-förmig und weist an einer Basis 70 senkrecht vorstehende und vorzugsweise zueinander parallel verlaufende Entriegelungsstifte 71 und 72 auf. Das Entriegelungselement 7 wird mit seinen Entriegelungsstiften 71 und 72 entlang einer Mittellinie M des zusammengebauten Scheibenführungselements SFE, die mittig zwischen den beiden Federstegen 301 und 302 des ersten Führungsteils 3 verläuft, in das Scheibenführungselement SFE eingeschoben. Die Einschieberichtung der Entriegelungsstifte 71 und 72 des Entriegelungselements 7 in das Innere des Scheibenführungselements SFE erfolgt hierbei in Richtung Z entgegengesetzt zur Einschieberichtung des Einführzapfens 30 des ersten Führungsteils 3 in den Aufnahmekanal 40 des zweiten Führungsteil 4. Die Entriegelungsstifte 71 und 72 werden hierbei über an dem zweiten Führungsteil 4 an dessen (unterer) Stirnseite 4b vorgesehene Entriegelungsöffnungen 45a und 45b entlang der Mittellinie M eingeschoben.

Der Abstand der beiden Entriegelungsstifte 71 und 72 ist so bemessen, dass die Entriegelungsstifte 71 und 72 beim Einschieben im Inneren des Scheibenführungselements SFE auf die jeweils in ihrer Rastposition vorliegenden Verriegelungshaken 301a und 302a einwirken und diese nach innen drücken. Derart wird mit zunehmendem Einschieben des Entriegelungselements 7 und seiner Entriegelungsstifte 71 und 72 die Verrastung zwischen den Führungsteilen 3 und 4 gelöst, sodass das erste Führungsteil 3 von dem zweiten Führungsteil 4 getrennt und nach oben (in Richtung Z) entlang des Führungselements 2 herausgezogen werden kann.

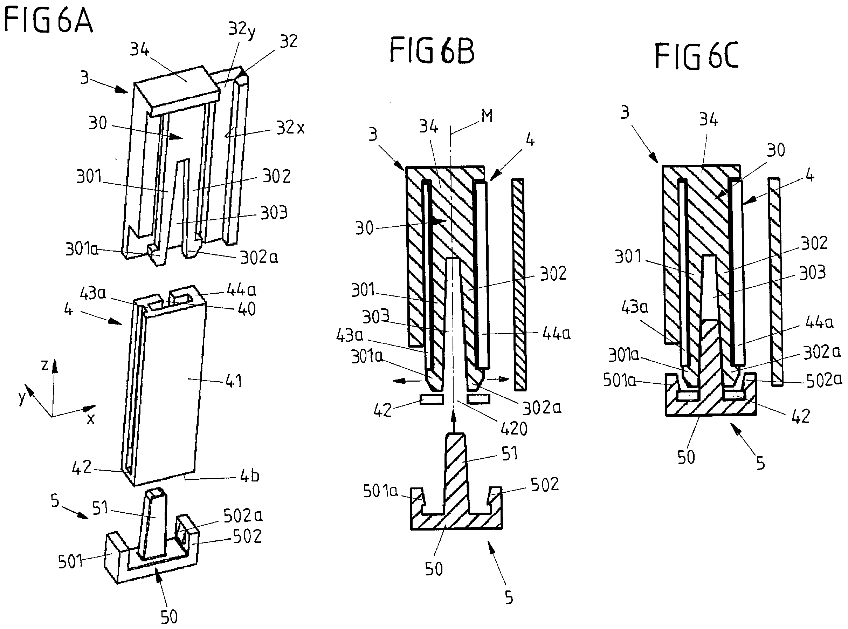

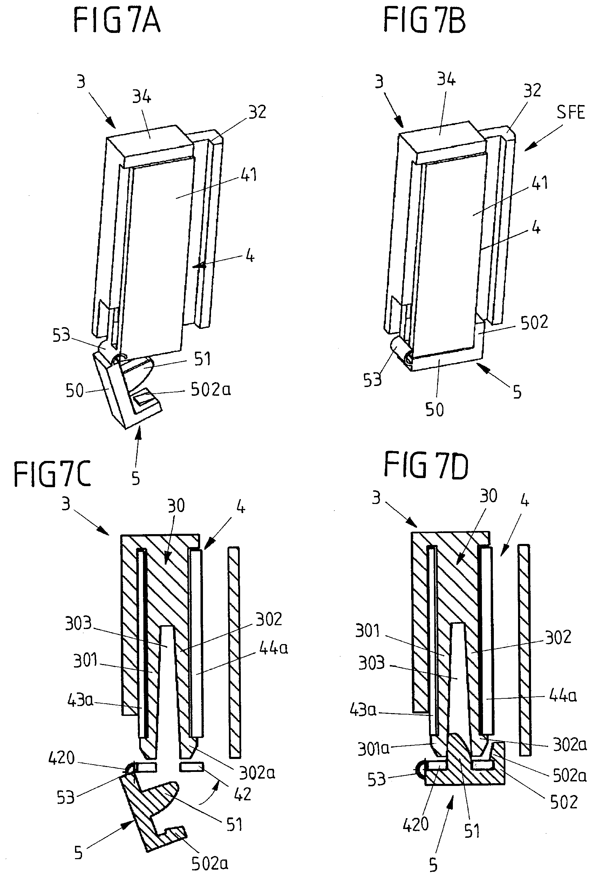

Mit den Figuren 6A bis 6C und 7A bis 7D sind zwei weitere Varianten eines Scheibenführungselements SFE veranschaulicht, bei denen das erste Führungsteil 3 mit zwei federelastisch gelagerten Verriegelungshaken 301a und 302a entsprechend der Variante der Figuren 5A bis 5F ausgebildet ist, jedoch zur zusätzlichen Sicherung der jeweiligen Rastposition der Verriegelungshaken 301a und 302a ein zusätzliches Teil des Scheibenführungselements SFE in Form eines Sicherungselements 5 vorgesehen ist.

Dieses Sicherungselement 5 weist jeweils einen von einer Basis 50 vorstehenden Sicherungsabschnitt in Form eines Sicherungszapfens 51 auf, der im verrasteten Zustand der beiden Führungsteile 3 und 4 in einen zwischen den beiden Verriegelungshaken 301a und 302a und ihren Federstegen 301 und 302 gebildeten Sicherungskanal 303 einsteckbar ist. Der Sicherungskanal 303 verjüngt sich hierbei konisch in Richtung des Endkörpers 34 des ersten Führungsteils 3 und liegt im verrasteten Zustand der beiden Führungsteile 3 und 4 einer Einführöffnung 420 in einem stirnseitigen Basisabschnitt 42 des zweiten Führungsteils 4 gegenüber. Über diese Einführöffnung 420 kann der Sicherungszapfen 51 in den Sicherungskanal 303 eingeschoben werden.

Über den eingeschobenen Sicherungszapfen 51 sind die Federstege 301 und 302 dann weiter nach außen gespreizt oder zumindest in ihrer gespreizten Lage, in der die Verriegelungshaken 301a und 302a in die Rastöffnungen des zweiten Führungsteils 4 eingeschnappt sind, gesichert. Derart sperrt der in den Sicherungskanal 303 eingeschobene Sicherungsabschnitt 51 des Sicherungselements 5 die Verriegelungshaken 301a und 302a gegen eine Verlagerung nach innen und damit aus ihrer jeweils eingenommenen Rastposition.

In der Variante der Figuren 6A bis 6C bildet die im Querschnitt U-förmige Basis 50 des Sicherungselements 5 an zwei vorstehenden Schenkeln 501 und 502, zwischen denen sich der Sicherungszapfen 51 erstreckt, ferner jeweils einen Cliphaken 501a oder 502a aus. Über diese Cliphaken 501a und 52a kann das Sicherungselement 5 an das zweite Führungsteil 4 (von unten her, d.h., in Richtung +Z) angeklipst werden. Das Sicherungselement 5 verrastet hierbei dann mit dem Basisabschnitt 42 des zweiten Führungsteils 4, indem die Cliphaken 501a und 502a jeweils den Basisabschnitt 42 hintergreifen und an einer seitlichen Aussparung einschnappen.

Während das Sicherungselement 5 in der Variante der Figuren 6A bis 6C als separates Bauteil ausgebildet ist, das nachträglich an die bereits miteinander verrasteten Führungsteile 3 und 4 gesteckt wird, sind bei der Ausführungsvariante der Figuren 7A bis 7D das zweite Führungsteil 4 und das Sicherungselement 5 einteilig ausgebildet. Das Sicherungselement 5 ist jedoch verstellbar an dem zweiten Führungsteil 4 gelagert. Hierfür ist das Sicherungselement 5 an der (unteren) Stirnseite 4b des zweiten Führungsteils 4 über ein Filmscharnier 53 gelenkig gelagert. Derart kann das Sicherungselement 5 aus einer für die Verbindung der beiden Führungsteile 3 und 4 eingenommenen Montageposition in eine Sicherungsposition geschwenkt werden. In dieser Sicherungsposition ist dann der hier einseitig konvex gewölbte Sicherungszapfen 51 über die Einführöffnung 420 des zweiten Führungsteils 4 in den Sicherungskanal 303 des ersten Führungsteils 3 eingesteckt. Über die einseitig konvexe Wölbung des Sicherungszapfens 51 ist sichergestellt, dass beim Schwenken des Sicherungselements 5 in seine Sicherungsposition der Sicherungszapfen 51 an dem Verriegelungshaken 302a vorbei geführt werden kann und der Sicherungszapfen 51 in der Sicherungsposition beide Verriegelungshaken 301a und 302a gegen eine unerwünschte Verlagerung sperrt.

Um die Sicherungsposition des Sicherungselements 5 der Variante der Figuren 7A bis 7D zu sichern, weist das Sicherungselement 5 auch hier wenigstens einen Schenkel 502 mit einem Cliphaken 502a auf, der in der Sicherungsposition an dem zweiten Führungsteil 4 einschnappt.

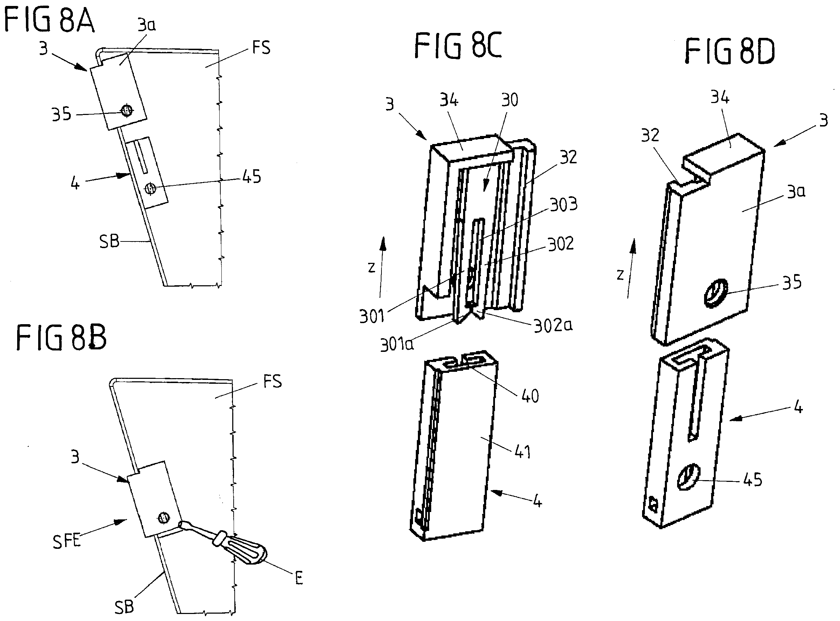

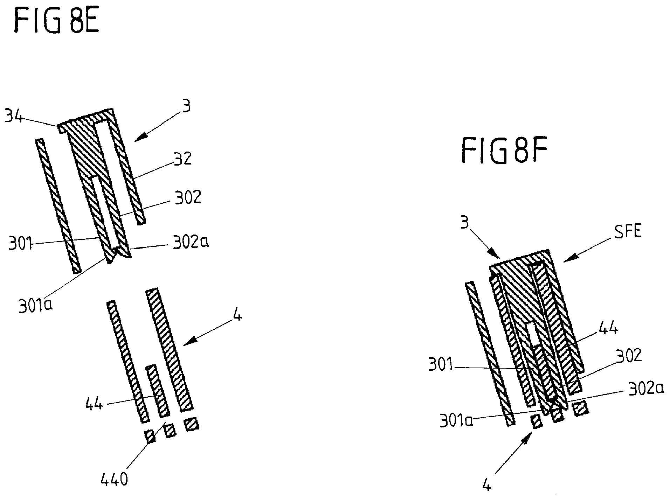

Mit den Figuren 8 bis 8F wird eine weitere Ausführungsvariante eines zweiteiligen Scheibenführungselements SFE veranschaulicht, bei dem erneut an dem ersten Führungsteil 3 innen liegende Federstege 301 und 302 mit an ihren Enden ausgebildeten Verriegelungshaken 301a und 302a vorhanden sind. Im Unterschied zu den zuvor erläuterten Ausführungsvarianten sind hierbei jedoch die Verriegelungshaken 301a und 302a über die Federstege 301 und 302 nicht zueinander entgegengesetzt nach außen vorgespannt, sondern nach innen aufeinander zu. Dementsprechend sind auch die Verriegelungshaken 301a und 302a zueinander orientiert, sodass diese in einem an das zweiten Führungsteil 4 eingesteckten Zustand gemeinsam ein und denselben innen liegenden Raststeg 44 des zweiten Führungsteils 4 hintergreifen und hierzu an einer Rastöffnung 440 von unterschiedlichen Seiten her einschnappen.

Es sei an dieser Stelle noch erwähnt, dass beim Einschnappen der Verriegelungshaken 301a und 302a (wie auch beim Einschnappen des Verriegelungshakens 310 der Variante der Figuren 1A bis 4D) eine bestimmungsgemäße Verrastung der beiden Führungsteile 3 und 4 miteinander für einen Monteur vorzugsweise akustisch wahrnehmbar erfolgt. Hört der Monteur ein charakteristisches Klick-Geräusch, kann davon ausgegangen werden, dass die beiden Führungsteile 3 und 4 bestimmungsgemäß mechanisch miteinander verrastet sind.

Zum Öffnen der über die Verriegelungshaken 301a und 302a bereitgestellten Rastverbindung zwischen den beiden Führungshallen 3 und 4 kann auch in dieser Variante ein Entriegelungselement 7 mit zwei vorstehenden Entriegelungsstiften 71 und 72 Verwendung finden. Hierüber werden dann die Verriegelungshaken 301a und 302a gegen die von den Federstegen 301 und 302 aufgebrachte Federkraft auseinander gedrückt und mithin gespreizt, um die Verriegelungshaken 301a und 302a außer Eingriff zu bringen.

Alternativ ist in dieser Variante das Heranführen eines Entriegelungswerkzeugs E, zum Beispiel in Form eines Schraubedrehers, an die beiden Federstege 301 und 302 vorgesehen. Das Heranführen erfolgt über im verrasteten Zustand der Führungsteile 3 und 4 miteinander zur Deckung gebrachte Entriegelungsöffnungen 35 und 45 der beiden Führungsteile 3 und 4. Eine Entriegelungsöffnung 35 ist an einer Innenseite 3a des ersten Führungsteils 3 vorgesehen, die eine Außenfläche des zusammengebauten Scheibenführungselements SFE bildet. Hierüber ist das Einstecken des Entriegelungswerkzeugs E in die innenliegende Entriegelungsöffnung 45 des zweiten Führungsteils 4 ermöglicht. Über die Entriegelungsöffnung 45 ist wiederum der Aufnahmekanal 40 zugänglich und mithin die hierin aufgenommenen Federstege 301 und 302 des ersten Führungsteils 3. Durch das eingesteckte Entriegelungswerkzeug E können somit die beiden Federstege 301 und 302, z.B. durch Drehen des Entriegelungswerkzeugs E gespreizt und damit die Verriegelungshaken 301a und 302a aus ihrer jeweiligen Rastposition verlagert werden.

Über die Entriegelungsöffnungen 35 und 45 kann ferner auch ein Exzenterelement in das Scheibenführungselements SFB eingesteckt werden, das bei Drehung die beiden Federstege 301 und 302 gespreizt, um die Führungsseile 3 und 4 voneinander trennen zu können. Grundsätzlich kann ferner vorgesehen sein, dass die Entriegelungsöffnung 35 des ersten Führungsteils 3, die an der das zweite Führungsteil 4 im zusammengebauten Zustand des Scheibenführungselements SFE (nahezu) vollständig überdeckenden Innenseite 3a von außen zugängliche ist, durch ein Deckelelement verschlossen ist.

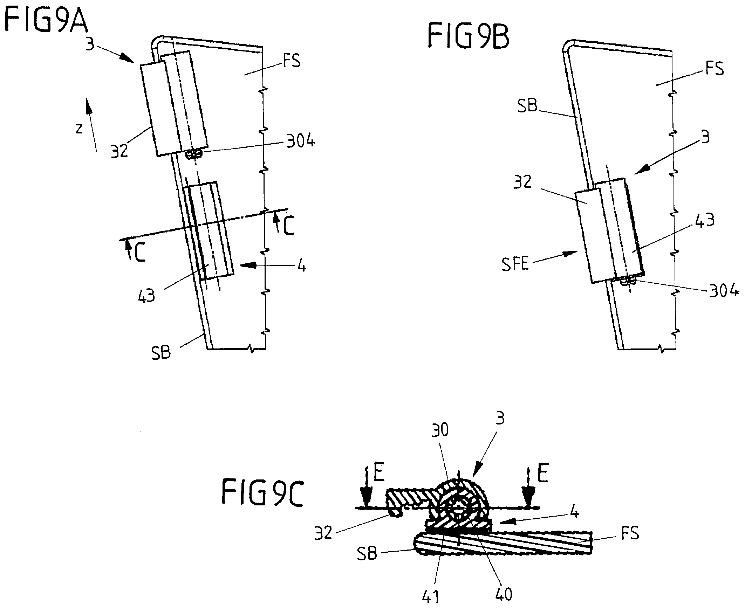

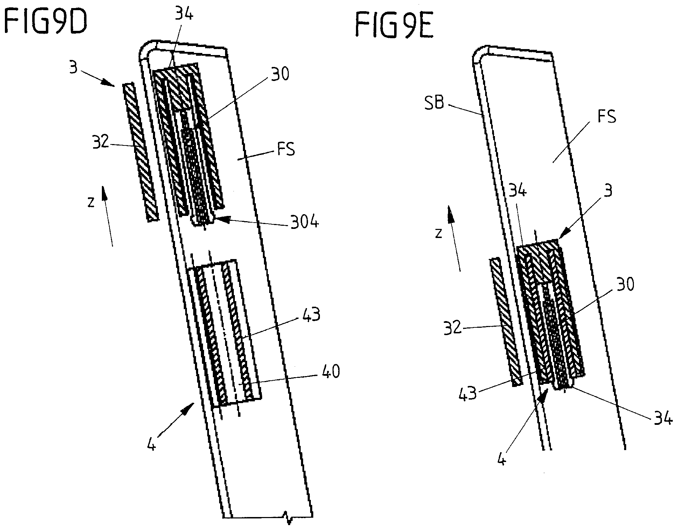

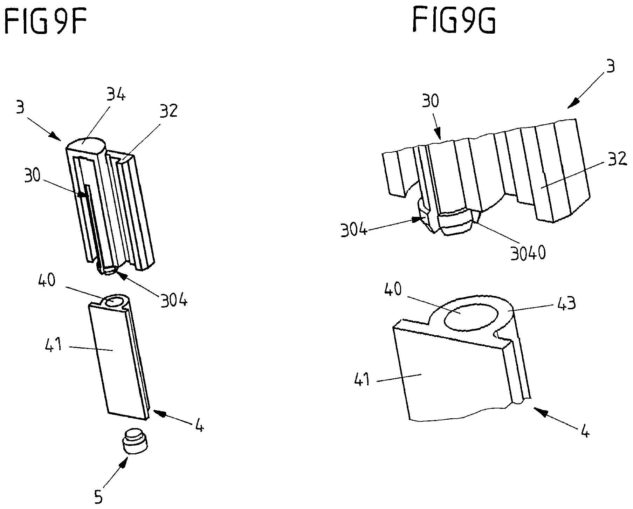

Die Figuren 9A bis 9G zeigen in unterschiedlichen Ansichten und Phasen während der Montage eine weitere Variante eines mehrteiligen - hier 3-teiligen - Scheibenführungselements SFE, bei dem erneut ein zweites Führungsteil 4 an die Innenseite der Fensterscheibe FS nahe der seitlichen Scheibenkante SB geklebt ist und das andere, erste Führungsteil 3 über einen Führungsabschnitt 32 verschieblich an einem hinteren Führungselement 2 des Fensterrahmens R vorpositionierbar ist. Das zweite Führungsteil 4 bildet hierbei einen hohlzylindrischen Abschnitt aus, in den ein kreiszylindrischer Einführzapfen 30 des ersten Führungsteils 3 einsteckbar ist. Der Einführzapfen 30 ist hierbei von einem im Querschnitt halbkreisförmigen Randabschnitt des ersten Führungskanals 3 umgeben, sodass beim Einstecken des Einführzapfens 30 in den Aufnahmekanal 40 des zweiten Führungsteils 4 das erste Führungsteil gleichzeitig auch über einen großen Teil der Mantelfläche einer den Aufnahmekanal 40 berandenden Zylinderwand 43 des zweiten Führungsteils 4 gestülpt wird. Die nach Art eines Scharniers aneinander gesteckten Führungsteile 3 und 4 sind hierbei wenigstens vor einer Verrastung noch relativ zueinander drehbar, wodurch gegebenenfalls eine Ausrichtung der Fensterscheibe FS während der Montage erleichtert ist.

Zur Verrastung der beiden Führungsteile 3 und 4 aneinander ist der Einführzapfen 30 endseitig mehrfach geschlitzt und in mehrere längserstreckte, federelastische Segmente unterteilt. Das derart in Längsrichtung segmentierte und in Richtung des zweiten Führungsteils 4 liegende Ende des Einführzapfens 30 bildet an jedem seiner Segmente zur Verrastung mit der Zylinderwand 43 des zweiten Führungsteils 4 einen Verriegelungshaken aus. Auf diese Weise wird das mehrfach geschlitzte Ende des Einführzapfens 30 beim Einstecken in den Aufnahmekanal 40 des Führungsteils 4 zunächst zusammengedrückt und spreizt sich nach dem Austritt aus dem Aufnahmekanal 40 am gegenüberliegenden Ende selbsttätig, um die Zylinderwandlung 43 des Aufnahmekanals 40 zu hintergreifen, wenn der Einführzapfen 30 maximal in den Aufnahmekanal 40 eingeschoben wurde.

Um die Verrastung zu sichern, wird im Anschluss ein Sicherungselement 5 an das durch den Aufnahmekanal 40 hindurchgestecktes Ende des Einführzapfens 30 gesteckt, und zwar in einen Sicherungskanal 3040 des Einführzapfens 30. Dieser Sicherungskanal 3040 ist in dem in dieser Ausführungsvariante zumindest teilweise hohlen Einführzapfen 30 ausgebildet und über das den Verriegelungsabschnitt 304 bildenden Ende zugänglich. Durch das in diesen Sicherungskanal 3040 eingesteckte Sicherungselement 5 des Scheibenführungselements SFE ist eine Verlagerung der einzelnen, die Verriegelungshaken ausbildenden Segmentes des Verriegelungsabschnitts 304, die den Sicherungskanal 3040 beranden, nach innen blockiert und ein Trennen der Führungsteile 3 und 4 voneinander nicht mehr möglich - zumindest nicht ohne vorheriges Entfernen des Sicherungselements 5.

Das Sicherungselement 5 ist vorliegen kreiszylindrisch ausgeführt, zum Beispiel in Form eines Stopfens, eines mehrstufigen, d.h., wenigstens zweistufigen Bolzens oder eines Spreizniets und in dem Sicherungskanal 3040 über einen Kraftschluss, z.B. über eine Presspassung, gehalten. Zu diesem Zweck kann das Sicherungselement 5 auch eine lokal aufgeraute Mantelfläche aufweisen, über die das Sicherungselement 5 an der segmentierten Innenwandung des Sicherungskanals 3040 anliegt. Alternativ kann das Sicherungselement z.B. auch als (Innen-)Sicherungsring ausgeführt sein.

Über die vorliegend dargestellten Ausführungsbeispiele einer erfindungsgemäßen Fensterheberbaugruppe und eines in diesem Zusammenhang beschriebenen Montageverfahrens kann bei einem Fensterheber für ein flächenbündiges Scheibenkonzept eine Fensterscheibe FS mit hieran fixierten vorderen und hinteren Scheibenführungselementen 1 und 4 in vergleichsweise einfacher und schneller Weise von oberhalb einer Fensterbrüstung montiert werden, wobei wenigstens eine der Verbindungen zu einer randseitigen Führung an der Fensteröffnung über eine Clipsverbindung bereitgestellt ist, vorliegend die Verbindung des hinteren Scheibenführungselements 1 an der hinteren karosserieseitigen oder türseitigen, B-säulennahen Führung 2. Derart ist auch eine Montage einer in ihrer geschlossenen Position flächenbündig mit die Fensteröffnung berandenden Karosserieteilen abschließenden Fensterscheibe FS an einer Fahrzeugtür T möglich, die keine abnehmbare Türaußenhaut aufweist. Vielmehr ist der Einbau der Fensterscheibe FS für ein sogenanntes "Flush glass"- oder "Flush glazing"-Fensterhebersystem auch bei einer Fahrzeugtür T möglich, die nach einem üblichen zweischaligen Türkonzept hergestellt ist.

### Bezugszeichenliste

- 1: Erstes Führungselement
- 2: Zweites Führungselement
- 20: Führungskanal
- 21: Dichtungsschnittstelle
- 3: Erstes Führungsteil
- 30: Einführzapfen (Einführabschnitt)
- 300: Einführkonus
- 301, 302: Federsteg
- 301a, 302a: Verriegelungshaken (Verriegelungsabschnitt)
- 303: Sicherungskanal
- 304: Verriegelungsabschnitt
- 3040: Sicherungskanal
- 31: Federsteg
- 310: Verriegelungshaken (Verriegelungsabschnitt)
- 32: Führungsabschnitt
- 32x, 32y: Führungsfläche
- 33: Federbogen (Federelement)
- 34: Endkörper
- 346: Stecköffnung (Schnittstelle)
- 35: Entriegelungsöffnung
- 3a: Innenseite
- 4: Zweites Führungsteil
- 40: Aufnahmekanal
- 41: Verbindungsabschnitt
- 42: Basisabschnitt
- 420: Einführöffnung
- 43: Zylinderwand
- 440: Rastöffnung
- 43a, 44, 44a: Raststeg
- 45, 45a, 45b: Entriegelungsöffnung
- 4a, 4b: Stirnseite
- 5: Sicherungselement
- 50: Basis
- 501, 502: Schenkel
- 501a, 502a: Cliphaken
- 51: Sicherungszapfen (Sicherungsabschnitt)
- 53: Filmscharnier (Gelenk)
- 6: Positionierungshilfe
- 60: Haltestab /-seil (Halteteil)
- 600: Haltehaken
- 61: Handhabe
- 610: Grifföffnung
- 613: Einsteckzapfen
- 7: Entriegelungselement
- 70: Basis
- 71, 72: Entriegelungsstift
- B: Blende
- D: Spiegeldreieck
- E: Entriegelungswerkzeug
- FS: Fensterscheibe
- M: Mittellinie
- O: Fensteröffnung
- R: Fensterrahmen
- RA, RB: Seitliches Rahmenteil
- RC: Oberes Rahmenteil / oberer Türrahmen
- SA, SB: Seitliche Scheibenkante
- SFE: Scheibenführungselement
- T: Fahrzeugtür
- TAB: Türaußenblech (Türaußenhaut)

## Patentansprüche

1. Fensterheberbaugruppe, mit einer verstellbaren Fensterscheibe (FS) für einen Fahrzeugfensterheber, bei dem die Fensterscheibe (FS) in einem geschlossenen Zustand flächenbündig zu oberen und/oder seitlichen Karosserieteilen vorliegt, die eine durch die Fensterscheibe (FS) zu schließende Fensteröffnung eines Fensterrahmens (R) beranden, wobei die Fensterscheibe entlang einer Verstellachse anzuheben und abzusenken ist, um die Fensteröffnung (O) zu schließen oder freizugeben, wobei die Fensterheberbaugruppe ferner mindestens das Folgende aufweist:
- wenigstens ein Scheibenführungselement (SFE), das an der Fensterscheibe (FS) im Bereich einer seitlichen Scheibenkante (SB) fixiert ist, und
- wenigstens ein rahmenseitiges Führungselement (2), an dem das Scheibenführungselement (SFE) an der Fensteröffnung (O) verschieblich gehalten ist,
wobei das wenigstens eine Scheibenführungselement (SFE) mehrteilig mit mindestens einem ersten Führungsteil (3) und einem zweiten Führungsteil (4) ausgeführt ist, wobei
- das erste Führungsteil (3) einen Führungsabschnitt (32) ausbildet, über den das Scheibenführungselement (SFE) verschieblich an dem rahmenseitigen Führungselement (2) gehalten ist,
- das zweite Führungsteil (4) einen Verbindungsabschnitt (40) ausbildet, über den das Scheibenführungselement (SFE) an der Fensterscheibe (FS) fixiert ist, und
- das erste Führungsteil (3) und das zweite Führungsteil (4) als voneinander separate Bauteile ausgebildet sind, wobei das zweite Führungsteil (4) unabhängig von dem ersten Führungsteil (3) an der Fensterscheibe (FS) fixiert ist und das erste Führungsteil (3) vorgesehen ist, zur Montage der Fensterheberbaugruppe unabhängig von dem zweiten Führungsteil (4) verschieblich an dem rahmenseitigen Führungselement (2) in einer Vormontageposition positioniert zu werden, bevor das Scheibenführungselement (SFE) bestimmungsgemäß zusammengebaut wird,
wobei das Scheibenführungselement (SFE) durch Verbinden des ersten Führungsteils (3) und des zweiten Führungsteils (4) miteinander zusammenbaubar ist, indem eine Relativbewegung der Führungsteile (3, 4) entlang der Verstellachse der Fensterscheibe erfolgt,
**dadurch gekennzeichnet, dass**
das erste Führungsteil (3) eine Schnittstelle (346) für eine lösbar mit dem ersten Führungsteil (3) zu verbindende Positionierhilfe (6) der Fensterheberbaugruppe aufweist, über die das erste Führungsteil (3) in der Vormontageposition an dem rahmenseitigen Führungselement (2) haltbar ist.

2. Fensterheberbaugruppe nach Anspruch 1, **dadurch gekennzeichnet, dass** das erste, an dem rahmenseitigen Führungselement (2) verschieblich zu positionierende Führungsteil (3) und das zweite, an der Fensterscheibe (FS) zu fixierende Führungsteil (4)
- jeweils eine mechanische Schnittstelle zur Verbindung der ersten und zweiten Führungsteile (3, 4) miteinander aufweisen oder
- jeweils eine mechanische Schnittstelle zur Verbindung der ersten und zweiten Führungsteile (3, 4) mit mindestens einem Koppelteil des Scheibenführungselements (SFE) aufweisen, über das eine Verbindung zwischen dem ersten Führungsteil (3) und dem zweiten Führungsteil (4) bereitgestellt wird.

3. Fensterheberbaugruppe nach Anspruch 1 oder 2, **dadurch gekennzeichnet, dass** das erste, an dem rahmenseitigen Führungselement (2) verschieblich zu positionierende Führungsteil (3) und das zweite, an der Fensterscheibe (FS) zu fixierende Führungsteil (4) miteinander verbindbar sind, und zwar indem eines der Führungsteile (3, 4) an einem Abschnitt (30, 40) des anderen Führungsteils (4, 3) entlang verschoben wird.

4. Fensterheberbaugruppe nach Anspruch 3, **dadurch gekennzeichnet, dass** das erste Führungsteil (3) und das zweite Führungsteil (4) miteinander verbindbar sind, indem
- das bereits verschieblich an dem rahmenseitigen Führungselement (2) gehaltene erste Führungsteil (3) entlang der Verstellachse in Richtung (-Z) des zweiten Führungsteils (4) geschoben wird, und/oder
- das bereits an der Fensterscheibe (FS) fixierte zweite Führungsteil (4) mit der Fensterscheibe (FS) entlang der Verstellachse in Richtung (Z) des ersten Führungsteils (3) geschoben wird.

5. Fensterheberbaugruppe nach einem der vorhergehenden Ansprüche, **dadurch gekennzeichnet, dass** das erste Führungsteil (3) und das zweite Führungsteil (4) aneinander steckbar sind und/oder dass wenigstens ein Abschnitt eines ersten oder zweiten Führungsteils (3, 4) im zusammengebauten Zustand des Scheibenführungselements (SFE) in dem anderen, zweiten oder ersten Führungsteil (4, 3) aufgenommen ist.

6. Fensterheberbaugruppe nach einem der vorhergehenden Ansprüche, **dadurch gekennzeichnet, dass** die Positionierhilfe (6) ein Halteteil (60) umfasst, über das die Positionierhilfe (6) mit einem Rahmenteil (RC) des Fensterrahmens (R) verbindbar ist.

7. Fensterheberbaugruppe nach einem der vorhergehenden Ansprüche, **dadurch gekennzeichnet, dass** die Positionierhilfe (6) eine Handhabe (61) umfasst, mithilfe der bei der Montage der Fensterheberbaugruppe das mit der Positionierhilfe (6) verbundene erste Führungsteil (3) manuell entlang des rahmenseitigen Führungselements (2) verschoben werden kann.

8. Fensterheberbaugruppe nach einem der vorhergehenden Ansprüche, **dadurch gekennzeichnet, dass** wenigstens eines der ersten und zweiten Führungsteile (3, 4) mindestens einen elastisch verlagerbaren Verriegelungsabschnitt (301a, 302a; 304; 310) aufweist, der eine formschlüssige Verbindung zwischen den ersten und zweiten Führungsteilen (3, 4) oder zwischen einem Koppelteil des Schreibenführungselements (SFE) und wenigstens einem der ersten und zweiten Führungsteile (3, 4) sichert, wenn die ersten und zweiten Führungsteile (3, 4) an dem zusammengebauten Scheibenführungselement (SFE) eine vorgegebene Relativlage zueinander einnehmen.

9. Fensterheberbaugruppe nach Anspruch 8, **dadurch gekennzeichnet, dass** der mindestens eine elastisch verlagerbare Verriegelungsabschnitt (301a, 302a; 304; 310) des ersten oder zweiten Führungsteils (3, 4) ausgebildet ist, selbsttätig mit einem Abschnitt (43, 43a, 44a, 44) des anderen, zweiten oder ersten Führungsteils (4, 3) und/oder einem Abschnitt des Koppelteils zu verrasten, wenn die ersten und zweiten Führungsteile (3, 4) die vorgegebene Relativlage zueinander einnehmen, und/oder dass an wenigstens einem der ersten und zweiten Führungsteile (3, 4) mindestens eine Entriegelungsöffnung (35; 45, 45a, 45b) vorgesehen ist, über die an dem zusammengebauten Scheibenführungselement (SFE) ein Abschnitt (71, 72) eines Entriegelungselements (7) oder ein Abschnitt eines Entriegelungswerkzeugs (E) auf das erste oder zweite Führungsteil (3, 4) einwirken kann, um den Verriegelungsabschnitt (301a, 302a; 310) zu verlagern und die ersten und zweiten Führungsteile (3, 4) voneinander und/oder das Koppelteil von wenigstens einem der ersten und zweiten Führungsteile (3, 4) trennen zu können.

10. Fensterheberbaugruppe nach einem der Ansprüche 8 oder 9, **dadurch gekennzeichnet, dass** das Scheibenführungselement (SFE) ein Sicherungselement (5) umfasst, das den mindestens einen elastisch verlagerbaren Verriegelungsabschnitt (301a, 302a) gegen eine Verlagerung aus einer Rastposition sperrt, in der der Verriegelungsabschnitt (301a, 302a) mit dem anderen, zweiten oder ersten Führungsteil (4, 3) und/oder dem Koppelteil verrastet ist.

11. Fensterheberbaugruppe nach Anspruch 10, **dadurch gekennzeichnet, dass** das Sicherungselement (5) einen Sicherungsabschnitt (51) umfasst, der eingesteckt in eine Öffnung oder einen Kanal (303, 3040), die oder der von dem Verriegelungsabschnitt (301a, 302a) berandet wird, den Verriegelungsabschnitt (301a, 302a) gegen eine Verlagerung sperrt, und/oder dass das Sicherungselement (5) an einem der ersten oder zweiten Führungsteile (3, 4) oder dem Koppelteil verstellbar gelagert ist oder dass das Sicherungselement (5) als separates Bauteil ausgebildet ist, das mit wenigstens einem der Führungsteile (3, 4) und/oder dem Koppelteil verbindbar ist, nachdem der mindestens eine Verriegelungsabschnitt (301a, 302a) seine Rastposition eingenommen hat.

12. Fensterheberbaugruppe nach einem der vorhergehenden Ansprüche, **dadurch gekennzeichnet, dass** über das zusammengebaute Scheibenführungselement (SFE) eine körperliche Führung der Fensterscheibe (FS) an dem rahmenseitigen Führungselement (2) sowohl entlang einer ersten Querrichtung (X), die sich im Wesentlichen parallel zu einer durch die Fensterscheibe (FS) definierten Scheibenebene erstreckt, als auch entlang einer zweiten Querrichtung (Y), die sich im Wesentlichen senkrecht zu der Scheibenebene erstreckt, bereitgestellt ist. und/oder dass an dem ersten Führungsteil (3) ein Federelement (33) zur elastischen Abstützung des Scheibenführungselements (SFE) an dem rahmenseitigen Führungselement (2) vorgesehen ist.

13. Verfahren zur Montage einer Fensterheberbaugruppe, mit einer verstellbaren Fensterscheibe (FS) für einen Fahrzeugfensterheber, bei dem die Fensterscheibe (FS) in einem geschlossenen Zustand flächenbündig zu oberen und/oder seitlichen Karosserieteilen vorliegt, die eine durch die Fensterscheibe (FS) zu schließende Fensteröffnung eines Fensterrahmens (R) beranden, wobei die Fensterscheibe entlang einer Verstellachse anzuheben und abzusenken ist, um die Fensteröffnung zu schließen oder freizugeben, wobei die Fensterheberbaugruppe ferner mindestens das Folgende aufweist:
- wenigstens ein Scheibenführungselement (SFE), das an der Fensterscheibe (FS) im Bereich einer seitlichen Scheibenkante (SB) fixiert ist, und
- wenigstens ein rahmenseitiges Führungselement (2), an dem das Scheibenführungselement (SFE) an der Fensteröffnung (O) verschieblich gehalten ist,
wobei das wenigstens eine Scheibenführungselement (SFE) mehrteilig mit mindestens einem ersten Führungsteil (3) und einem zweiten Führungsteil (4) ausgeführt ist, wobei
- das erste Führungsteil (3) einen Führungsabschnitt (32) des Scheibenführungselements (SFE) ausbildet, um dieses an dem rahmenseitigen Führungselement (2) verschieblich zu halten, und das vormontierte erste Führungsteil (3) über den Führungsabschnitt (32) verschieblich an dem rahmenseitigen Führungselement (2) in einer Vormontageposition positioniert wird, wobei das erste Führungsteil (3) eine Schnittstelle (346) für eine lösbar mit dem ersten Führungsteil (3) zu verbindende Positionierhilfe (6) der Fensterheberbaugruppe aufweist, über die das erste Führungsteil (3) in der Vormontageposition an dem rahmenseitigen Führungselement (2) haltbar ist,
- das zweite Führungsteil (4) einen Verbindungsabschnitt (40) für die Verbindung des Scheibenführungselements (SFE) mit der Fensterscheibe (FS) ausbildet und das zweite Führungsteil (4) über den Verbindungsabschnitt (40) an der Fensterscheibe (FS) fixiert wird,
- das Scheibenführungselement (SFE) mit den ersten und zweiten Führungsteilen (3, 4) erst zusammengebaut wird, nachdem das erste Führungsteil (3) an dem rahmenseitigen Führungselement (2) in der Vormontageposition positioniert wurde und nachdem das zweite Führungsteil (4) an der Fensterscheibe (FS) fixiert wurde, und
- das erste Führungsteil und das zweite Führungsteil miteinander verbunden werden, indem eine Relativbewegung der Führungsteile entlang der Verstellachse der Fensterscheibe erfolgt.

14. Verfahren nach Anspruch 13, **dadurch gekennzeichnet, dass** zum Zusammenbau des Scheibenführungselements (SFE) das an dem rahmenseitigen Führungselement (2) positionierte erste Führungsteil (3) und das an der Fensterscheibe (FS) fixierte zweite Führungsteil (4) miteinander verbunden werden und/oder dass zur Sicherung einer vorgegebenen Relativlage der ersten und zweiten Führungsteile (3, 4) zueinander wenigstens ein Abschnitt (51) eines Sicherungselements (5) des Scheibenführungselements (SFE) in eine Öffnung oder einen Kanal (303, 3040) des ersten oder zweiten Führungsteils (3, 4) eingesteckt wird.

## Claims

1. A window lifter assembly, comprising an adjustable window pane (FS) for a vehicle window lifter, in which the window pane (FS) in a closed state is flush with upper and/or lateral body parts which border a window opening, to be closed by the window pane (FS), in a window frame (R), wherein the window pane is to be raised and lowered along an adjustment axis in order to close or to open up the window opening (O), wherein the window lifter assembly furthermore has at least the following:
- at least one pane guide element (SFE) which is fixed on the window pane (FS) in the region of a lateral pane edge (SB), and
- at least one frame-side guide element (2) at which the pane guide element (SFE) is held displaceably on the window opening (O),
wherein the at least one pane guide element (SFE) is of multi-part design with at least one first guide part (3) and a second guide part (4), wherein
- the first guide part (3) forms a guide portion (32) via which the pane guide element (SFE) is held displaceably on the frame-side guide element (2),
- the second guide part (4) forms a connecting portion (40) via which the pane guide element (SFE) is fixed on the window pane (FS), and
- the first guide part (3) and the second guide part (4) are designed as components which are separate from each other, wherein the second guide part (4) is fixable on the window pane (FS) independently of the first guide part (3), and the first guide part (3) is provided to be displaceably positioned on the frame-side guide element (2) in a preassembly position independently of the second guide part (4) for the assembly of the window lifter assembly before the pane guide element (SFE) is assembled as intended,
wherein the pane guide element (SFE) is assemblable by connecting the first guide part (3) and the second guide part (4) to each other by a relative movement of the guide parts (3, 4) taking place along said adjustment axis of the window pane,
**characterized in that**
the first guide part (3) has an intersection (346) for a positioning aid (6) of the window lifter assembly, which positioning aid (6) is to be connected releasably to the first guide part (3) and via which the first guide part (3) is holdable in a preassembly position on the frame-side guide element (2) .

2. The window lifter assembly as claimed in claim 1, **characterized in that** the first guide part (3) which is to be positioned displaceably on the frame-side guide element (2), and the second guide part (4) which is to be fixed on the window pane (FS)
- each have a mechanical intersection for connecting the first and second guide parts (3, 4) to each other, or
- each have a mechanical intersection for connecting the first and second guide parts (3, 4) to at least one coupling part of the pane guide element (SFE), via which a connection between the first guide part (3) and the second guide part (4) is provided.

3. The window lifter assembly as claimed in claim 1 or 2, **characterized in that** the first guide part (3) which is to be positioned displaceably on the frame-side guide element (2) and the second guide part (4) which is to be fixed on the window pane (FS) are connectable to each other, specifically by one of the guide parts (3, 4) being displaced along a portion (30, 40) of the other guide part (4, 3).

4. The window lifter assembly as claimed in claim 3, **characterized in that** the first guide part (3) and the second guide part (4) are connectable to each other by
- the first guide part (3) which is already held displaceably on the frame-side guide element (2) being pushed along the adjustment axis in the direction (-Z) of the second guide part (4), and/or
- the second guide part (4) which is already fixed on the window pane (FS) being pushed with the window pane (FS) along the adjustment axis in the direction (Z) of the first guide part (3).

5. The window lifter assembly as claimed in one of the preceding claims, **characterized in that** the first guide part (3) and the second guide part (4) are pluggable onto each other and/or in the assembled state of the pane guide element (SFE), at least one portion of a first or second guide part (3, 4) is received in the other, second or first, guide part (4, 3) .

6. The window lifter assembly as claimed in one of the preceding claims, **characterized in that** the positioning aid (6) comprises a holding part (60) via which the positioning aid (6) is connectable to a frame part (RC) of the window frame (R).

7. The window lifter assembly as claimed in one of the preceding claims, **characterized in that** the positioning aid (6) comprises a handle (61), with the aid of which, during the assembly of the window lifter assembly, the first guide part (3), which is connected to the positioning aid (6), can be displaced manually along the frame-side guide element (2).

8. The window lifter assembly as claimed in one of the preceding claims, **characterized in that** at least one of the first and second guide parts (3, 4) has at least one elastically shiftable locking portion (301a, 302a; 304; 310) which secures a form-fitting connection between the first and second guide parts (3, 4) or between a coupling part of the pane guide element (SFE) and at least one of the first and second guide parts (3, 4) when the first and second guide parts (3, 4) take up a predetermined relative position to each other on the assembled pane guide element (SFE).

9. The window lifter assembly as claimed in claim 8, **characterized in that** the at least one elastically shiftable locking portion (301a, 302a; 304; 310) of the first or second guide part (3, 4) is designed to automatically latch to a portion (43, 43a, 44a, 44) of the other, second or first, guide part (4, 3) and/or to a portion of the coupling part when the first and second guide parts (3, 4) take up the predetermined relative position to each other, and/or at least one unlocking opening (35; 45, 45a, 45b) is provided on at least one of the first and second guide parts (3, 4) via which unlocking opening, on the assembled pane guide element (SFE), a portion (71, 72) of an unlocking element (7) or a portion of an unlocking tool (E) can act on the first or second guide part (3, 4) in order to shift the locking portion (301a, 302a; 310) and in order to be able to separate the first and second guide parts (3, 4) from each other and/or the coupling part from at least one of the first and second guide parts (3, 4).

10. The window lifter assembly as claimed in one of claims 8 or 9, **characterized in that** the pane guide element (SFE) comprises a securing element (5) which blocks the at least one elastically shiftable locking portion (301a, 302a) against shifting out of a latching portion in which the locking portion (301a, 302a) is latched to the other, second or first, guide part (4, 3) and/or to the coupling part.

11. The window lifter assembly as claimed in claim 10, **characterized in that** the securing element (5) comprises a securing portion (51) which, inserted into an opening or a channel (303, 3040), which is bordered by the locking portion (301a, 302a), blocks the locking portion (301a, 302a) against shifting, and/or the securing element (5) is mounted adjustably on one of the first or second guide parts (3, 4) or on the coupling part, or **in that** the securing element (5) is designed as a separate component which is connectable to at least one of the guide parts (3, 4) and/or to the coupling part after the at least one locking portion (301a, 302a) has taken up its latching position.

12. The window lifter assembly as claimed in one of the preceding claims, **characterized in that**, via the assembled pane guide element (SFE), physical guidance of the window pane (FS) is provided on the frame-side guide element (2) both along a first transverse direction (X), which extends substantially parallel to a pane plane defined by the window pane (FS), and also along a second transverse direction (Y), which extends substantially perpendicularly to the pane plane and/or a spring element (33) for elastically supporting the pane guide element (SFE) on the frame-side guide element (2) is provided on the first guide part (3).

13. A method for assembling a window lifter assembly, comprising an adjustable window pane (FS) for a vehicle window lifter, in which the window pane (FS) in a closed state is flush with upper and/or lateral body parts which border a window opening, to be closed by the window pane (FS), in a window frame (R) , wherein the window pane is to be raised and lowered along an adjustment axis in order to close or to open up the window opening (O), wherein the window lifter assembly furthermore has at least the following:
- at least one pane guide element (SFE) which is fixed on the window pane (FS) in the region of a lateral pane edge (SB), and
- at least one frame-side guide element (2) at which the pane guide element (SFE) is held displaceably on the window opening (O),
Wherein the at least one pane guide element (SFE) is of multi-part design with at least one first guide part (3) and a second guide part (4), wherein
- the first guide part (3) forms a guide portion (32) of the pane guide element (SFE) in order to hold the latter displaceably on the frame-side guide element (2), and the preassembled first guide part (3) is positioned in a preassembled position displaceably on the frame-side guide element (2) via the guide portion (32), wherein the first guide part (3) has an intersection (346) for a positioning aid (6) of the window lifter assembly, which positioning aid (6) is to be connected releasably to the first guide part (3) and via which the first guide part (3) is holdable in a preassembly position on the frame-side guide element (2),
- the second guide part (4) forms a connecting portion (40) for connecting the pane guide element (SFE) to the window pane (FS), and the second guide part (4) is fixed on the window pane (FS) via the connecting portion (40),
- the pane guide element (SFE) is only assembled together with the first and second guide parts (3, 4) after the first guide part (3) has been positioned on the frame-side guide element (2) in the preassembled position and after the second guide part (4) has been fixed on the window pane (FS), and
- the first guide part and the second guide part are connected to each other by a relative movement of the guide parts taking place along said adjustment axis of the window pane.

14. The method as claimed in claim 13, **characterized in that**, for the assembly of the pane guide element (SFE), the first guide part (3) which is positioned on the frame-side guide element (2) and the second guide part (4) which is fixed on the window pane (FS) are connected to each other, and/or in order to secure a predetermined relative position of the first and second guide parts (3, 4) to each other, at least one portion (51) of a securing element (5) of the pane guide element (SFE) is inserted into an opening or a channel (303, 3040) of the first or second guide part (3, 4).

## Revendications

1. Ensemble lève-vitre avec une vitre (FS) ajustable pour un lève-vitre de véhicule, où la vitre (FS) se trouve dans un état fermé en affleurement de surface avec des parties de carrosserie supérieures et/ou latérales, qui bordent une ouverture de fenêtre, à fermer par la vitre (FS), d'un cadre de fenêtre (R), dans lequel la vitre est à relever et à abaisser le long d'un axe d'ajustement pour fermer ou dégager l'ouverture de fenêtre (O), dans lequel l'ensemble lève-vitre présente en outre au moins ce qui suit :
- au moins un élément de guidage de fenêtre (SFE), qui est fixé sur la vitre (FS) dans la zone d'une arête de vitre (SB) latérale, et
- au moins un élément de guidage (2) côté cadre, sur lequel l'élément de guidage de vitre (SFE) est maintenu de manière à pouvoir coulisser sur l'ouverture de fenêtre (O),
dans lequel l'au moins un élément de guidage de fenêtre (SFE) est réalisé en plusieurs parties avec au moins une première partie de guidage (3) et une deuxième partie de guidage (4), dans lequel
- la première partie de guidage (3) réalise une section de guidage (32), par l'intermédiaire de laquelle l'élément de guidage de vitre (SFE) est maintenu de manière à pouvoir coulisser sur l'élément de guidage (2) côté cadre,
- la deuxième partie de guidage (4) réalise une section de liaison (40), par l'intermédiaire de laquelle l'élément de guidage de vitre (SFE) est fixé sur la vitre (FS), et
- la première partie de guidage (3) et la deuxième partie de guidage (4) sont réalisées en tant que composants séparés l'un de l'autre, dans lequel la deuxième partie de guidage (4) est fixée sur la vitre (FS) indépendamment de la première partie de guidage (3) et la première partie de guidage (3) est prévue pour être positionnée dans une position de prémontage de manière à pouvoir coulisser sur l'élément de guidage (2) côté cadre indépendamment de la deuxième partie de guidage (4) pour le montage de l'ensemble lève-vitre avant que l'élément de guidage de vitre (SFE) ne soit assemblé conformément à l'usage prévu,
dans lequel l'élément de guidage de vitre (SFE) peut être assemblé en reliant l'une à l'autre la première partie de guidage (3) et la deuxième partie de guidage (4) en ce qu'un déplacement relatif des parties de guidage (3, 4) est effectué le long de l'axe d'ajustement de la vitre,
**caractérisé en ce que**
la première partie de guidage (3) présente une interface (346) pour une aide au positionnement (6), à relier de manière amovible à la première partie de guidage (3), de l'ensemble lève-vitre, par l'intermédiaire de laquelle la première partie de guidage (3) peut être maintenue dans la position de prémontage sur l'élément de guidage (2) côté cadre.

2. Ensemble lève-vitre selon la revendication 1, **caractérisé en ce que** la première partie de guidage (3) à positionner de manière à pouvoir coulisser sur l'élément de guidage (2) côté cadre et la deuxième partie de guidage (4) à fixer sur la vitre (FS)
- présentent respectivement une interface mécanique pour relier entre elles les première et deuxième parties de guidage (3, 4), ou
- présentent respectivement une interface mécanique pour relier les première et deuxième parties de guidage (3, 4) à au moins une partie de couplage de l'élément de guidage de vitre (SFE), par l'intermédiaire de laquelle est fournie une liaison entre la première partie de guidage (3) et la deuxième partie de guidage (4).

3. Ensemble lève-vitre selon la revendication 1 ou 2, **caractérisé en ce que** la première partie de guidage (3) à positionner de manière à pouvoir coulisser sur l'élément de guidage (2) côté cadre et la deuxième partie de guidage (4) à fixer sur la vitre (FS) peuvent être reliées l'une à l'autre, et ce **en ce qu'**une des parties de guidage (3, 4) est coulissée le long d'une section (30, 40) de l'autre partie de guidage (4, 3).

4. Ensemble lève-vitre selon la revendication 3, **caractérisé en ce que** la première partie de guidage (3) et la deuxième partie de guidage (4) peuvent être reliées l'une à l'autre **en ce que**
- la première partie de guidage (3) maintenue déjà de manière à pouvoir coulisser sur l'élément de guidage (2) côté cadre est glissée le long de l'axe d'ajustement en direction (-Z) de la deuxième partie de guidage (4), et/ou
- la deuxième partie de guidage (4) fixée déjà sur la vitre (FS) est glissée avec la vitre (FS) le long de l'axe d'ajustement en direction (Z) de la première partie de guidage (3).

5. Ensemble lève-vitre selon l'une quelconque des revendications précédentes, **caractérisé en ce que** la première partie de guidage (3) et la deuxième partie de guidage (4) peuvent être enfichées l'une sur l'autre, et/ou qu'au moins une section d'une première ou deuxième partie de guidage (3, 4) est logée dans l'autre, la deuxième ou la première, partie de guidage (4, 3) dans l'état assemblé de l'élément de guidage de vitre (SFE).

6. Ensemble lève-vitre selon l'une quelconque des revendications précédentes, **caractérisé en ce que** l'aide au positionnement (6) comprend une partie de maintien (60), par l'intermédiaire de laquelle l'aide au positionnement (6) peut être reliée à une partie de cadre (RC) du cadre de fenêtre (R).

7. Ensemble lève-vitre selon l'une quelconque des revendications précédentes, **caractérisé en ce que** l'aide au positionnement (6) comprend une manette (61), à l'aide de laquelle, lors du montage de l'ensemble lève-vitre, la première partie de guidage (3) reliée à l'aide au positionnement (6) peut être coulissée manuellement le long de l'élément de guidage (2) côté cadre.

8. Ensemble lève-vitre selon l'une quelconque des revendications précédentes, **caractérisé en ce qu'**au moins une des première et deuxième parties de guidage (3, 4) présente au moins une section de verrouillage (301a, 302a ; 304 ; 310) pouvant être déplacée élastiquement, qui bloque une liaison à complémentarité de forme entre les première et deuxième parties de guidage (3, 4) ou entre une partie de couplage de l'élément de guidage de vitre (SFE) et au moins une des première et deuxième parties de guidage (3, 4) quand les première et deuxième parties de guidage (3, 4) adoptent l'une par rapport à l'autre une position relative prédéfinie sur l'élément de guidage de vitre (SFE) assemblé.

9. Ensemble lève-vitre selon la revendication 8, **caractérisé en ce que** l'au moins une section de verrouillage (301a, 302a; 304 ; 310) pouvant être déplacée élastiquement de la première ou deuxième partie de guidage (3, 4) est réalisée pour s'enclencher de manière autonome avec une section (43, 43a, 44a, 44) de l'autre, la deuxième ou la première, partie de guidage (4, 3) et/ou avec une section de la partie de couplage quand les première et deuxième parties de guidage (3, 4) adoptent la position relative prédéfinie l'une par rapport à l'autre, et/ou qu'est prévue sur au moins une des première et deuxième parties de guidage (3, 4) au moins une ouverture de déverrouillage (35 ; 45, 45a, 45b), par l'intermédiaire de laquelle une section (71, 72) d'un élément de déverrouillage (7) ou une section d'un outil de déverrouillage (E) peut agir sur la première ou deuxième partie de guidage (3, 4) sur l'élément de guidage de vitre (SFE) assemblé pour déplacer la section de verrouillage (301a, 302a ; 310) et pour pouvoir séparer les première et deuxième parties de guidage (3, 4) les unes des autres et/ou la partie de couplage d'au moins une des première et deuxième parties de guidage (3, 4).

10. Ensemble lève-vitre selon l'une quelconque des revendications 8 ou 9, **caractérisé en ce que** l'élément de guidage de vitre (SFE) comprend un élément de blocage (5), qui empêche l'au moins une section de verrouillage (301a, 302a) pouvant être déplacée élastiquement de se déplacer hors d'une position d'enclenchement, dans laquelle la section de verrouillage (301a, 302a) est enclenchée avec l'autre, la deuxième ou la première, partie de guidage (4, 3) et/ou avec la partie de couplage.

11. Ensemble lève-vitre selon la revendication 10, **caractérisé en ce que** l'élément de blocage (5) comprend une section de blocage (51), qui, enfichée dans une ouverture ou dans un canal (303, 3040), qui est bordée ou bordé par la section de verrouillage (301a, 302a), empêche la section de verrouillage (301a, 302a) de se déplacer, et/ou que l'élément de blocage (5) est monté de manière à pouvoir être ajusté sur une des première ou deuxième partie de guidage (3, 4) ou sur la partie de couplage, ou que l'élément de blocage (5) est réalisé en tant que composant séparé, qui peut être relié à au moins une des parties de guidage (3, 4) et/ou à la partie de couplage après que l'au moins une section de verrouillage (301a, 302a) a adopté sa position d'enclenchement.

12. Ensemble lève-vitre selon l'une quelconque des revendications précédentes, **caractérisé en ce qu'**est fourni, par l'intermédiaire de l'élément de guidage de vitre (SFE) assemblé, un guidage physique de la vitre (FS) sur l'élément de guidage (2) côté cadre à la fois le long d'une première direction transversale (X), qui s'étend de manière sensiblement parallèle par rapport à un plan de vitre défini par la vitre (FS), et le long d'une deuxième direction transversale (Y), qui s'étend de manière sensiblement perpendiculaire par rapport au plan de vitre, et/ou qu'un élément de ressort (33) pour soutenir élastiquement l'élément de guidage de vitre (SFE) sur l'élément de guidage (2) côté cadre est prévu sur la première partie de guidage (3).

13. Procédé de montage d'un ensemble lève-vitre avec une vitre (FS) pouvant être ajustée pour un lève-vitre de véhicule, où la vitre (FS) se trouve dans un état fermé en affleurement de surface par rapport à des parties de carrosserie supérieures et/ou latérales, qui bordent une ouverture de fenêtre, à fermer par la vitre (FS), d'un cadre de fenêtre (R), dans lequel la vitre est à relever ou à abaisser le long d'un axe d'ajustement pour fermer ou dégager l'ouverture de fenêtre, dans lequel l'ensemble lève-vitre présente en outre au moins ce qui suit :
- au moins un élément de guidage de vitre (SFE), qui est fixé sur la vitre (FS) dans la zone d'une arête de vitre (SB) latérale, et
- au moins un élément de guidage (2) côté cadre, sur lequel l'élément de guidage de vitre (SFE) est maintenu de manière à pouvoir coulisser sur l'ouverture de fenêtre (O),
dans lequel l'au moins un élément de guidage de vitre (SFE) est réalisé en plusieurs parties avec au moins une première partie de guidage (3) et une deuxième partie de guidage (4), dans lequel
- la première partie de guidage (3) réalise une section de guidage (32) de l'élément de guidage de vitre (SFE) pour maintenir celui-ci de manière à pouvoir coulisser sur l'élément de guidage (2) côté cadre, et la première partie de guidage (3) prémontée est positionnée dans une position de prémontage de manière à pouvoir coulisser sur l'élément de guidage (2) côté cadre, dans lequel la première partie de guidage (3) présente une interface (346) pour une aide au positionnement (6), à relier de manière amovible à la première partie de guidage (3), de l'ensemble lève-vitre, par l'intermédiaire duquel la première partie de guidage (3) peut être maintenue sur l'élément de guidage (2) côté cadre dans la position de prémontage,
- la deuxième partie de guidage (4) réalise une section de liaison (40) pour la liaison de l'élément de guidage de vitre (SFE) à la vitre (FS), et la deuxième partie de guidage (4) est fixée sur la vitre (FS) par l'intermédiaire de la section de liaison (40),
- l'élément de guidage de vitre (SFE) est assemblé aux première et deuxième parties de guidage (3, 4) seulement après que la première partie de guidage (3) a été positionnée dans la position de prémontage sur l'élément de guidage (2) côté cadre et après que la deuxième partie de guidage (4) a été fixée sur la vitre (FS), et
- la première partie de guidage et la deuxième partie de guidage sont reliées l'une à l'autre en ce qu'un déplacement relatif des parties de guidage est effectué le long de l'axe d'ajustement de la vitre.

14. Procédé selon la revendication 13, **caractérisé en ce que** pour assembler l'élément de guidage de vitre (SFE), la première partie de guidage (3) positionnée sur l'élément de guidage (2) côté cadre et la deuxième partie de guidage (4) fixée sur la vitre (FS) sont reliées l'une à l'autre, et/ou que pour bloquer une position relative prédéfinie des première et deuxième parties de guidage (3, 4) l'une par rapport à l'autre, au moins une section (51) d'un élément de blocage (5) de l'élément de guidage de vitre (SFE) est enfichée dans une ouverture ou dans un canal (303, 3040) de la première ou deuxième partie de guidage (3, 4).
